# EUROPEAN PATENT APPLICATION

(11) **EP 4 776 192 A1**
(43) Date of publication of application: **15.07.2026**
(21) Application number: 23956358.8
(22) Date of filing: 24.10.2023
(51) Int. Cl.: G06N 20/20

(54) **DATA PROCESSING METHOD AND RELATED DEVICE**

(71) Applicant: HUAWEI TECHNOLOGIES CO., LTD., Shenzhen 518129 (CN)
(72) Inventor: LI, Mengyuan, Shenzhen, Guangdong 518129 (CN); WANG, Jian, Shenzhen, Guangdong 518129 (CN); LI, Rong, Shenzhen, Guangdong 518129 (CN)
(74) Representative: Pfenning, Meinig & Partner mbB
(86) International application number: PCT/CN2023/126287
(87) International publication number: WO 2025/086104

(57) **Abstract**

This application provides a data processing method and a related apparatus. The method provided **in** this application includes: A first apparatus determines personalized category data of the first apparatus; the first apparatus determines an unlearning-completion level of a first global model on the personalized category data, where the first global model is a global model at a moment at which the first apparatus requests or performs unlearning determining; and the first apparatus determines, based on the unlearning-completion level, whether to perform federated unlearning for the personalized category data. **In** this way, whether federated unlearning needs to be performed can be effectively determined, to avoid overheads respectively caused by unnecessary federated unlearning and model performance recovery. Thus, federated unlearning is better achieved.

## Description

### TECHNICAL FIELD

This application relates to the field of communication technologies, and in particular, to a data processing method and a related apparatus.

### BACKGROUND

Federated learning (federated learning, FL) is a distributed learning paradigm. Specifically, each distributed node trains a local model based on its own local data, and sends the local model to a central node. The central node aggregates the local models reported by all the distributed nodes to obtain a global model. However, for the global model, if a specific local node requests to withdraw from the federated learning and requests to remove contribution made by the local node to training of the global model, federated unlearning needs to be performed based on the global model. In this way, the contribution of the local node to the training of the global model is deleted, and federated unlearning is achieved in a federated learning scenario.

However, how to better achieve federated unlearning is worth considering.

### SUMMARY

This application provides a data processing method and a related apparatus, so that a first apparatus determines an unlearning-completion level of a first global model on personalized category data, and determines, based on the unlearning-completion level, whether to perform federated unlearning for the personalized category data. In this way, whether federated unlearning needs to be performed can be effectively determined, to avoid overheads respectively caused by unnecessary federated unlearning and model performance recovery. Thus, federated unlearning is better achieved.

A first aspect of this application provides a data processing method. The method may be performed by a first apparatus. The first apparatus may be a terminal device or a network device, a component (for example, a processor, a chip, or a chip system) in a terminal device or a network device, a logical module or software that can implement all or a part of functions of a terminal device, or a logical module or software that can implement all or a part of functions of a network device. The method includes:

The first apparatus determines personalized category data of the first apparatus; the first apparatus determines an unlearning-completion level of a first global model on the personalized category data, where the first global model is a global model at a moment at which the first apparatus requests or performs unlearning determining; and the first apparatus determines, based on the unlearning-completion level, whether to perform federated unlearning for the personalized category data. Optionally, the unlearning-completion level of the first global model on the personalized category data represents an unlearning degree of the first global model on the personalized category data. In this way, whether federated unlearning needs to be performed can be effectively determined, to avoid overheads respectively caused by unnecessary federated unlearning and model performance recovery. Thus, federated unlearning is better achieved.

Based on the first aspect, in a possible implementation, that the first apparatus determines, based on the unlearning-completion level, whether to perform federated unlearning for the personalized category data includes: If the unlearning-completion level is less than a first threshold, the first apparatus determines to perform federated unlearning for the personalized category data; or if the unlearning-completion level is greater than or equal to the first threshold, the first apparatus determines not to perform federated unlearning for the personalized category data. It can be learned that, if the unlearning-completion level is less than the first threshold, it indicates that complete unlearning for the personalized category data is not performed. Thus, federated unlearning needs to be performed for the personalized category data. If the unlearning-completion level is greater than or equal to the first threshold, it indicates that complete unlearning for the personalized category data is performed. Thus, federated unlearning does not need to be performed for the personalized category data. The first apparatus may effectively determine, based on the unlearning-completion level, whether federated unlearning needs to be performed, thereby avoiding unnecessary federated unlearning.

Based on the first aspect, in a possible implementation, if the unlearning-completion level is less than or equal to a first threshold, the first apparatus determines to perform federated unlearning for the personalized category data; or if the unlearning-completion level is greater than the first threshold, the first apparatus determines not to perform federated unlearning for the personalized category data. It can be learned that, if the unlearning-completion level is less than or equal to the first threshold, it indicates that complete unlearning for the personalized category data is not performed. Thus, federated unlearning needs to be performed for the personalized category data. If the unlearning-completion level is greater than the first threshold, it indicates that complete unlearning for the personalized category data is performed. Thus, federated unlearning does not need to be performed for the personalized category data. The first apparatus may effectively determine, based on the unlearning-completion level, whether federated unlearning needs to be performed, thereby avoiding unnecessary federated unlearning.

Based on the first aspect, in a possible implementation, if the first apparatus determines to perform federated unlearning for the personalized category data, the method further includes: The first apparatus sends an unlearning request to a second apparatus, where the unlearning request is used to request initiation of federated unlearning for the personalized category data. Therefore, it is convenient for the first apparatus to perform federated unlearning for the personalized category data.

Based on the first aspect, in a possible implementation, if the first apparatus determines not to perform federated unlearning for the personalized category data, the method further includes: The first apparatus sends a first withdrawal indication to a second apparatus, where the first withdrawal indication notifies the second apparatus that the first apparatus withdraws a federated learning process. Therefore, the first apparatus withdraws the federated learning process. Optionally, the first withdrawal indication may also be referred to as a first withdrawal notification, a first notification, or the like. This is not specifically limited in this application.

Based on the first aspect, in a possible implementation, the unlearning-completion level of the first global model on the personalized category data is determined based on first accuracy and second accuracy, the first accuracy represents classification accuracy of the first global model on the personalized category data, the second accuracy represents classification accuracy of a second global model on the personalized category data, the second global model is a global model at a moment at which the first apparatus joins the federated learning process, and the moment at which the first apparatus requests or performs unlearning determining is later than the moment at which the first apparatus joins the federated learning process. In this implementation, a manner of determining the unlearning-completion level of the first global model on the personalized category data is shown, and is conducive to implementation of the solution. Optionally, the unlearning-completion level of the first global model on the personalized category data is equal to the second accuracy/the first accuracy, thereby representing the unlearning degree of the first global model on the personalized category data.

Based on the first aspect, in a possible implementation, that the first apparatus determines the personalized category data of the first apparatus includes: The first apparatus tracks, in the federated learning process, improvement in classification accuracy corresponding to various types of category data of the first apparatus; and the first apparatus uses category data with greatest improvement in corresponding classification accuracy as the personalized category data, or the first apparatus uses category data whose corresponding classification accuracy is higher than a preset threshold as the personalized category data. In this implementation, a possible manner in which the first apparatus determines the personalized category data is shown, and the personalized category data is determined by tracking improvement in classification accuracy corresponding to the various types of category data, thereby helping the first apparatus accurately determine the personalized category data of the first apparatus. This helps improve unlearning effect.

Based on the first aspect, in a possible implementation, the method further includes: The first apparatus sends an auxiliary determining request to the second apparatus, where the auxiliary determining request is used to request the second apparatus to assist the first apparatus in determining the personalized category data; the first apparatus receive a third global model from the second apparatus, where the third global model is obtained by performing weighted fusion on a global model obtained by performing gradient descent on the first global model by an apparatus other than the first apparatus; and that the first apparatus determines the personalized category data of the first apparatus includes: The first apparatus determines variation of classification accuracy of the third global model on the various types of category data of the first apparatus relative to classification accuracy of the first global model on the various types of category data of the first apparatus; and the first apparatus uses category data whose classification accuracy has decreased as the personalized category data, or the first apparatus uses category data whose classification accuracy has decreased most as the personalized category data, or the first apparatus uses category data whose classification accuracy has decreased by a degree greater than a preset threshold as the personalized category data. In this implementation, another possible manner in which the first apparatus determines the personalized category data is shown. The first apparatus determines the personalized category data with assistance of the second apparatus to the first apparatus, so that the first apparatus accurately determines the personalized category data of the first apparatus. This helps improve unlearning effect.

Based on the first aspect, in a possible implementation, before the first apparatus determines the personalized category data of the first apparatus, the method further includes: The first apparatus sends an unlearning determining request to the second apparatus, where the unlearning determining request is used to request to determine whether to perform federated unlearning; the first apparatus receives a training contribution degree from the second apparatus, where the training contribution degree represents the extent of contribution of the first apparatus to model training; the first apparatus based on the training contribution degree determines whether to perform federated unlearning; and if yes, the first apparatus is triggered to perform the step of determining the personalized category data of the first apparatus. Therefore, the first apparatus preliminarily determines, based on the training contribution degree, whether to perform federated unlearning, and then further determines, based on the unlearning-completion level of the first global model on the personalized category data, whether to perform federated unlearning for the personalized category data. It can be learned from that, necessity of federated unlearning is more effectively determined in a dual-determining process, to avoid unnecessary unlearning.

It should be noted that, the implementation may be used as an independent aspect, and does not depend on the first aspect and various implementations of the first aspect. Specifically, the solution provided in the independent aspect may include: The first apparatus receives a training contribution degree from the second apparatus, where the training contribution degree represents the extent of contribution of the first apparatus to model training; the first apparatus determines, based on the training contribution degree, whether to perform federated unlearning; and if yes, the first apparatus determines to perform federated unlearning; or if no, the first apparatus determines not to perform federated unlearning. Optionally, before the first apparatus receives the training contribution degree from the second apparatus, the method further includes: The first apparatus sends an unlearning determining request to the second apparatus, where the unlearning determining request is used to request to determine whether to perform federated unlearning. Optionally, after the first apparatus determines to perform federated unlearning, the method further includes: The first apparatus determines personalized category data of the first apparatus; the first apparatus determines an unlearning-completion level of a first global model on the personalized category data, where the first global model is a global model at a moment at which the first apparatus requests or performs unlearning determining; and the first apparatus determines, based on the unlearning-completion level, whether to perform federated unlearning for the personalized category data. Optionally, after the first apparatus determines not to perform federated unlearning, the method further includes: The first apparatus sends a third withdrawal indication to the second apparatus, where the third withdrawal indication indicates the first apparatus to withdraw the federated learning process. Therefore, the first apparatus withdraws the federated learning process.

Based on the first aspect, in a possible implementation, if the first apparatus determines to perform federated unlearning for the personalized category data, the method further includes: The first apparatus receives a start indication from the second apparatus, where the start indication indicates the first apparatus to initiate federated unlearning for the personalized category data; the first apparatus performs gradient ascent on the first global model based on the personalized category data, to obtain a fourth global model, where an unlearning-completion level of the fourth global model on the personalized category data is greater than the first threshold, or an unlearning-completion level of the fourth global model on the personalized category data is greater than or equal to the first threshold; and the first apparatus sends the fourth global model to the second apparatus. Therefore, unlearning effect is ensured, and incomplete unlearning or excessive unlearning is avoided, thereby avoiding overheads caused by unnecessary unlearning.

It should be noted that, the implementation may be used as an independent aspect, and does not depend on the first aspect and various implementations of the first aspect. Specifically, the solution provided in the independent aspect may include: The first apparatus receives a start indication from the second apparatus, where the start indication indicates the first apparatus to initiate federated unlearning for the personalized category data; the first apparatus performs gradient ascent on the first global model based on the personalized category data, to obtain a fourth global model, where an unlearning-completion level of the fourth global model on the personalized category data is greater than the first threshold, or an unlearning-completion level of the fourth global model on the personalized category data is greater than or equal to the first threshold; and the first apparatus sends the fourth global model to the second apparatus.

Based on the first aspect, in a possible implementation, the unlearning-completion level of the fourth global model on the personalized category data is determined based on the second accuracy and third accuracy, the second accuracy represents the classification accuracy of the second global model on the personalized category data, the third accuracy represents classification accuracy of the fourth global model on the personalized category data, and the second global model is the global model at the moment at which the first apparatus joins the federated learning process. In this implementation, a manner of determining the unlearning-completion level of the fourth global model on the personalized category data is shown, and is conducive to implementation of the solution. Optionally, the unlearning-completion level of the fourth global model on the personalized category data is equal to the second accuracy/the third accuracy, thereby representing the unlearning degree of the fourth global model on the personalized category data. This helps ensure unlearning effect and avoid incomplete unlearning, excessive unlearning, or the like.

Based on the first aspect, in a possible implementation, the method further includes: The first apparatus receives a first withdrawal permission indication from the second apparatus, where the first withdrawal permission indication indicates that the first apparatus is allowed to withdraw the federated learning process. In this implementation, after the second apparatus receives the fourth global model, the second apparatus may directly allow the first apparatus to withdraw the federated learning process. Alternatively, after the second apparatus determines that the fourth global model does not need performance recovery, the second apparatus may directly allow the first apparatus to withdraw the federated learning process. Optionally, before the first apparatus receives the first withdrawal permission indication from the second apparatus, the method further includes: The first apparatus sends a first withdrawal request to the second apparatus, where the first withdrawal request is used by the first apparatus to request to withdraw the federated learning process.

Based on the first aspect, in a possible implementation, the method further includes: The first apparatus receives a first performance recovery indication from the second apparatus, where the first performance recovery indication indicates the first apparatus to perform performance recovery on the fourth global model; the first apparatus performs gradient descent on the fourth global model based on public category data of the first apparatus, to obtain a fifth global model; and the first apparatus sends the fifth global model to the second apparatus. In this implementation, when the fourth global model needs performance recovery, the first apparatus may receive the first performance recovery indication, and perform gradient descent on the fourth global model, to implement performance recovery on the fourth global model. This can avoid excessive unlearning of the fourth global model, improve unlearning effect, and ensure practicability of the solution.

Based on the first aspect, in a possible implementation, the method further includes: The first apparatus receives a second withdrawal permission indication from the second apparatus, where the second withdrawal permission indication indicates that the first apparatus is allowed to withdraw the federated learning process. In this implementation, if the fifth global model does not need performance recovery, the second apparatus directly allows the first apparatus to withdraw the federated learning process. The first apparatus receives the second withdrawal permission indication, and withdraws the federated learning process. Optionally, the first apparatus receives the second withdrawal permission indication from the second apparatus, and the method further includes: The first apparatus sends a second withdrawal request to the second apparatus, where the second withdrawal request is used by the first apparatus to request to withdraw the federated learning process.

Based on the first aspect, in a possible implementation, the method further includes: The first apparatus receives a sixth global model and a first verification indication from the second apparatus, where the sixth global model is obtained by performing, by using a first group of weighted values, weighted fusion on the fourth global model and the global model obtained by performing gradient descent on the first global model by the apparatus other than the first apparatus, and the first verification indication indicates the first apparatus to perform unlearning performance verification on the sixth global model; the first apparatus performs unlearning performance verification on the sixth global model, to obtain a first verification result; and the first apparatus sends the first verification result to the second apparatus. In this implementation, unlearning for the personalized category data is achieved in a weighted fusion manner, so that unlearning performance can be ensured, and overheads generated by model performance recovery are reduced based on the public category data learned by the another apparatus.

It should be noted that, the implementation may be used as an independent aspect, and does not depend on the first aspect and a corresponding implementation of the first aspect. Specifically, the solution provided in the independent aspect may include: The first apparatus receives a start indication from the second apparatus, where the start indication indicates the first apparatus to initiate federated unlearning for the personalized category data; the first apparatus performs gradient ascent on the first global model based on the personalized category data, to obtain a fourth global model, where an unlearning-completion level of the fourth global model on the personalized category data is greater than the first threshold, or an unlearning-completion level of the fourth global model on the personalized category data is greater than or equal to the first threshold; the first apparatus sends the fourth global model to the second apparatus; the first apparatus receives a sixth global model and a first verification indication from the second apparatus, where the sixth global model is obtained by performing, by using a first group of weighted values, weighted fusion on the fourth global model and the global model obtained by performing gradient descent on the first global model by the apparatus other than the first apparatus, and the first verification indication indicates the first apparatus to perform unlearning performance verification on the sixth global model; the first apparatus performs unlearning performance verification on the sixth global model, to obtain a first verification result; and the first apparatus sends the first verification result to the second apparatus.

Based on the first aspect, in a possible implementation, if the first verification result represents that verification succeeds, the method further includes: The first apparatus sends a second withdrawal indication to the second apparatus, where the second withdrawal indication notifies the second apparatus that the first apparatus withdraws the federated learning process. When the first verification result represents that verification succeeds, the first apparatus may directly withdraw the federated learning process. Optionally, the second withdrawal indication may also be referred to as a second withdrawal notification or a second notification. This is not specifically limited in this application.

Based on the first aspect, in a possible implementation, if the first verification result represents that verification succeeds, the method further includes: The first apparatus receives a third withdrawal permission indication from the second apparatus, where the third withdrawal permission indication indicates that the first apparatus is allowed to withdraw the federated learning process. When the first verification result represents that verification succeeds, when the first apparatus receives the third withdrawal permission indication, the first apparatus may directly withdraw the federated learning process. Optionally, before the first apparatus receives the third withdrawal permission indication from the second apparatus, the method further includes: The first apparatus sends a third withdrawal request to the second apparatus, where the third withdrawal request is used by the first apparatus to request to withdraw the federated learning process.

Based on the first aspect, in a possible implementation, if the first verification result represents that verification succeeds, the method further includes: The first apparatus receives a second performance recovery indication from the second apparatus, where the second performance recovery indication indicates the first apparatus to perform performance recovery on the sixth global model; the first apparatus performs gradient descent on the sixth global model based on public category data of the first apparatus, to obtain a seventh global model; and the first apparatus sends the seventh global model to the second apparatus. In this implementation, the first verification result represents that verification succeeds, but performance recovery needs to be performed on the sixth global model, so that the first apparatus may receive the second performance recovery indication, and perform performance recovery on the sixth global model. This can avoid performance deterioration of the global model.

Based on the first aspect, in a possible implementation, the method further includes: The first apparatus receives a fourth withdrawal permission indication from the second apparatus, where the fourth withdrawal permission indication indicates that the first apparatus is allowed to withdraw the federated learning process. In this implementation, when the seventh global model does not need performance recovery, the first apparatus may receive the fourth withdrawal permission indication. Then, the first apparatus may withdraw the federated learning process. This ensures performance of the global model. Optionally, before the first apparatus receives the fourth withdrawal permission indication from the second apparatus, the method further includes: The first apparatus sends a fourth withdrawal request to the second apparatus, where the fourth withdrawal request is used by the first apparatus to request to withdraw the federated learning process.

Based on the first aspect, in a possible implementation, if the first verification result represents that verification fails, the method further includes: The first apparatus receives an eighth global model and a second verification indication from the second apparatus, where the eighth global model is obtained by performing, by using a second group of weighted values, weighted fusion on the fourth global model and the global model obtained by performing gradient descent on the first global model by the apparatus other than the first apparatus, and the second verification indication indicates the first apparatus to perform unlearning performance verification on the eighth global model; the first apparatus performs unlearning performance verification on the eighth global model, to obtain a second verification result; and the first apparatus sends the second verification result to the second apparatus. When the first verification result represents that verification fails, the second apparatus performs weighted fusion by using another group of weighted values to obtain the eighth global model, and sends the eighth global model to the first apparatus. Therefore, unlearning performance can be ensured, and overheads generated caused by model performance recovery can be reduced based on public category data learned by another apparatus.

A second aspect of this application provides a data processing method. The method may be performed by a second apparatus. The second apparatus may be a terminal device, a network device, or a cloud server, or a component (for example, a processor, a chip, or a chip system) in a terminal device, a network device, or a cloud server, or a logical module or software that can implement all or a part of functions of a terminal device, or a logical module or software that can implement all or a part of functions of a network device, or a logical module or software that can implement all or a part of functions of a cloud server. The method includes:

The second apparatus receives an unlearning request from a first apparatus, where the unlearning request is used to request initiation of federated unlearning for personalized category data of the first apparatus, an unlearning-completion level of a first global model on the personalized category data is less than a first threshold, or an unlearning-completion level of a first global model on the personalized category data is less than or equal to a first threshold, and the first global model is a global model at a moment at which the first apparatus requests or performs unlearning determining. Therefore, it is convenient for the first apparatus to perform federated unlearning for the personalized category data, to avoid overheads respectively caused by unnecessary federated unlearning and model performance recovery. Thus, federated unlearning is better achieved.

A third aspect of this application provides a data processing method. The method may be performed by a second apparatus. The second apparatus may be a terminal device, a network device, or a cloud server, or a component (for example, a processor, a chip, or a chip system) in a terminal device, a network device, or a cloud server, or a logical module or software that can implement all or a part of functions of a terminal device, or a logical module or software that can implement all or a part of functions of a network device, or a logical module or software that can implement all or a part of functions of a cloud server. The method includes:

The second apparatus receives a first withdrawal indication from a first apparatus, where the first withdrawal indication notifies the second apparatus that the first apparatus withdraws a federated learning process, an unlearning-completion level of a first global model on personalized category data is greater than a first threshold, or an unlearning-completion level of a first global model on personalized category data is greater than or equal to a first threshold, and the first global model is a global model at a moment at which the first apparatus requests or performs unlearning determining. Therefore, this can avoid unnecessary unlearning, and reduce or avoid overheads caused by unlearning. Optionally, the first withdrawal indication may also be referred to as a first withdrawal notification or a first notification. This is not specifically limited in this application.

Based on the second aspect or the third aspect, in a possible implementation, the unlearning-completion level of the first global model on the personalized category data is determined based on first accuracy and second accuracy, the first accuracy represents classification accuracy of the first global model on the personalized category data, the second accuracy represents classification accuracy of a second global model on the personalized category data, the second global model is a global model at a moment at which the first apparatus joins the federated learning process, and the moment at which the first apparatus requests or performs unlearning determining is later than the moment at which the first apparatus joins the federated learning process. In this implementation, a manner of determining the unlearning-completion level of the first global model on the personalized category data is shown, and is conducive to implementation of the solution. Optionally, the unlearning-completion level of the first global model on the personalized category data is equal to the second accuracy/the first accuracy, thereby representing the unlearning degree of the first global model on the personalized category data.

Based on the second aspect or the third aspect, in a possible implementation, before the second apparatus receives the unlearning request from the first apparatus, or before the second apparatus receives the first withdrawal indication from the first apparatus, the method further includes: The second apparatus receives an auxiliary determining request from the first apparatus, where the auxiliary determining request is used to request the second apparatus to assist the first apparatus in determining the personalized category data; and the second apparatus sends a third global model to the first apparatus, where the third global model is obtained by performing weighted fusion on a global model obtained by performing gradient descent on the first global model by an apparatus other than the first apparatus, and the third global model is used by the first apparatus to determine the personalized category data. In this implementation, a specific process in which the second apparatus assists the first apparatus in determining the personalized category data is shown, so that the first apparatus accurately determines the personalized category data of the first apparatus. This helps improve unlearning effect.

Based on the second aspect or the third aspect, in a possible implementation, before the second apparatus receives the unlearning request from the first apparatus, or before the second apparatus receives the first withdrawal indication from the first apparatus, the method further includes: The second apparatus receives an unlearning determining request from the first apparatus, where the unlearning determining request is used to request to determine whether to perform federated unlearning; and the second apparatus sends a training contribution degree to the first apparatus, where the training contribution degree represents the extent of contribution of the first apparatus to model training. In this implementation, the second apparatus may send the training contribution degree to the first apparatus, so that the first apparatus preliminarily determines, based on the training contribution degree, whether to perform federated unlearning, and then further determines, based on the unlearning-completion level of the first global model on the personalized category data, whether to perform federated unlearning for the personalized category data. It can be learned from that, necessity of federated unlearning is more effectively determined in a dual-determining process, to avoid unnecessary unlearning.

It should be noted that, the implementation may be used as an independent aspect, and does not depend on the second aspect or the third aspect and a corresponding implementation. The solution provided in the independent aspect may include: The second apparatus sends a training contribution degree to the first apparatus, where the training contribution degree represents the extent of contribution of the first apparatus to model training. Optionally, before the second apparatus sends the training contribution degree to the first apparatus, the method further includes: The second apparatus receives an unlearning determining request from the first apparatus, where the unlearning determining request is used to request to determine whether to perform federated unlearning. Optionally, when the first apparatus determines, based on the training contribution degree, not to perform federated unlearning, the method further includes: The second apparatus receives a third withdrawal indication from the first apparatus, where the third withdrawal indication indicates the first apparatus to withdraw the federated learning process.

Based on the second aspect or the third aspect, in a possible implementation, after the second apparatus receives the unlearning request from the first apparatus, the method further includes: The second apparatus sends a start indication to the first apparatus, where the start indication indicates the first apparatus to initiate federated unlearning for the personalized category data; and the second apparatus receives a fourth global model from the first apparatus, where the fourth global model is obtained by the first apparatus by performing gradient ascent on the first global model based on the personalized category data, and an unlearning-completion level of the fourth global model on the personalized category data is greater than the first threshold, or an unlearning-completion level of the fourth global model on the personalized category data is greater than or equal to the first threshold. Therefore, unlearning effect is ensured, and incomplete unlearning or excessive unlearning is avoided, thereby avoiding overheads caused by unnecessary unlearning. It should be noted that, the implementation may be used as an independent aspect, and does not depend on the second aspect or the third aspect and a corresponding implementation.

Based on the second aspect or the third aspect, in a possible implementation, the unlearning-completion level of the fourth global model on the personalized category data is determined based on the second accuracy and third accuracy, the second accuracy represents the classification accuracy of the second global model on the personalized category data, the third accuracy represents classification accuracy of the fourth global model on the personalized category data, and the second global model is the global model at the moment at which the first apparatus joins the federated learning process. In this implementation, a manner of determining the unlearning-completion level of the fourth global model on the personalized category data is shown, and is conducive to implementation of the solution. Optionally, the unlearning-completion level of the fourth global model on the personalized category data is equal to the second accuracy/the third accuracy, thereby representing the unlearning degree of the fourth global model on the personalized category data. This helps ensure unlearning effect and avoid incomplete unlearning, excessive unlearning, or the like.

Based on the second aspect or the third aspect, in a possible implementation, the method further includes: The second apparatus sends a first test request to the apparatus other than the first apparatus, where the first test request indicates the apparatus other than the first apparatus to perform an accuracy test on the fourth global model; the second apparatus receives first local accuracy sent by the apparatus other than the first apparatus; the second apparatus determines first global accuracy based on the first local accuracy sent by the apparatus other than the first apparatus; and the second apparatus determines, based on the first global accuracy, whether the fourth global model needs performance recovery. In this implementation, the second apparatus may evaluate performance of the fourth global model, to avoid performance deterioration of the model caused by unlearning, and ensure performance of the global model.

Based on the second aspect or the third aspect, in a possible implementation, the method further includes: The second apparatus sends a first withdrawal permission indication to the first apparatus, where the first withdrawal permission indication indicates that the first apparatus is allowed to withdraw the federated learning process. In this implementation, after the second apparatus receives the fourth global model, the second apparatus may directly allow the first apparatus to withdraw the federated learning process. Alternatively, the second apparatus evaluates performance of the fourth global model. If the fourth global model does not need performance recovery, the second apparatus may directly allow the first apparatus to withdraw the federated learning process. This ensures performance of the global model. Optionally, before the second apparatus sends the first withdrawal permission indication to the first apparatus, the method further includes: The second apparatus receives a first withdrawal request from the first apparatus, where the first withdrawal request is used by the first apparatus to request to withdraw the federated learning process.

Based on the second aspect or the third aspect, in a possible implementation, the method further includes: The second apparatus sends the fourth global model to the apparatus other than the first apparatus, where the fourth global model is used by the apparatus other than the first apparatus to continue to perform the federated learning process. Therefore, the apparatus other than the first apparatus continues the federated learning process based on the fourth global model. The apparatus other than the first apparatus does not need to record historical data, but continues to perform training based on the fourth global model, thereby avoiding high storage overheads.

Based on the second aspect or the third aspect, in a possible implementation, if the fourth global model needs performance recovery, the method further includes:

The second apparatus sends a first performance recovery indication to the first apparatus, where the first performance recovery indication indicates the first apparatus to perform performance recovery on the fourth global model; and the second apparatus receives a fifth global model from the first apparatus, where the fifth global model is obtained by performing gradient descent on the fourth global model based on public category data of the first apparatus. This can avoid excessive unlearning of the fourth global model, improve unlearning effect, and ensure practicability of the solution.

Based on the second aspect or the third aspect, in a possible implementation, if the fifth global model does not need performance recovery, the method further includes: The second apparatus sends a second withdrawal permission indication to the first apparatus, where the second withdrawal permission indication indicates that the first apparatus is allowed to withdraw the federated learning process. In this implementation, if the fifth global model does not need performance recovery, the second apparatus directly allows the first apparatus to withdraw the federated learning process. The first apparatus receives the second withdrawal permission indication, and withdraws the federated learning process. Optionally, before the second apparatus sends the second withdrawal permission indication to the first apparatus, the method further includes: The second apparatus receives a second withdrawal request from the first apparatus, where the second withdrawal request is used by the first apparatus to request to withdraw the federated learning process.

Based on the second aspect or the third aspect, in a possible implementation, if the fifth global model does not need performance recovery, the method further includes:

The second apparatus sends the fifth global model to the apparatus other than the first apparatus, where the fifth global model is used by the apparatus other than the first apparatus to continue to perform the federated learning process. Therefore, the apparatus other than the first apparatus continues the federated learning process based on the fifth global model. The apparatus other than the first apparatus does not need to record historical data, but continues to perform training based on the fifth global model, thereby avoiding high storage overheads.

Based on the second aspect or the third aspect, in a possible implementation, the method further includes: The second apparatus sends a sixth global model and a first verification indication to the first apparatus, where the sixth global model is obtained by performing, by using a first group of weighted values, weighted fusion on the fourth global model and the global model obtained by performing gradient descent on the first global model by the apparatus other than the first apparatus, and the first verification indication indicates the first apparatus to perform unlearning performance verification on the sixth global model; and the second apparatus receives a first verification result from the first apparatus, where the first verification result is obtained by performing unlearning performance verification on the sixth global model. In this implementation, unlearning for the personalized category data is achieved in a weighted fusion manner, so that unlearning performance can be ensured, and overheads generated by model performance recovery are reduced based on the public category data learned by the another apparatus.

It should be noted that, the implementation may be used as an independent aspect, and does not depend on the second aspect or the third aspect and a corresponding implementation of the second aspect or the third aspect. The solution provided in the independent aspect may include: The second apparatus sends a start indication to the first apparatus, where the start indication indicates the first apparatus to initiate federated unlearning for the personalized category data; the second apparatus receives a fourth global model from the first apparatus, where the fourth global model is obtained by the first apparatus by performing gradient ascent on the first global model based on the personalized category data, and an unlearning-completion level of the fourth global model on the personalized category data is greater than the first threshold; the second apparatus sends a sixth global model and a first verification indication to the first apparatus, where the sixth global model is obtained by performing, by using a first group of weighted values, weighted fusion on the fourth global model and the global model obtained by performing gradient descent on the first global model by the apparatus other than the first apparatus, and the first verification indication indicates the first apparatus to perform unlearning performance verification on the sixth global model; and the second apparatus receives a first verification result from the first apparatus, where the first verification result is obtained by performing unlearning performance verification on the sixth global model.

Based on the second aspect or the third aspect, in a possible implementation, the method further includes: If the first verification result represents that verification succeeds, the method further includes: The second apparatus receives a second withdrawal indication from the first apparatus, where the second withdrawal indication notifies the second apparatus that the first apparatus withdraws the federated learning process. When the first verification result represents that verification succeeds, the first apparatus may directly withdraw the federated learning process. Optionally, the second withdrawal indication may also be referred to as a second withdrawal notification or a second notification. This is not specifically limited in this application.

Based on the second aspect or the third aspect, in a possible implementation, if the first verification result represents that verification succeeds, the method further includes: The second apparatus sends a third withdrawal permission indication to the first apparatus, where the third withdrawal permission indication indicates that the first apparatus is allowed to withdraw the federated learning process. When the first verification result represents that verification succeeds, the second apparatus receives a withdrawal request from the first apparatus, and sends the third withdrawal permission indication to the first apparatus. Therefore, it indicates that the first apparatus is allowed to withdraw the federated learning process. Optionally, before the second apparatus sends the third withdrawal permission indication to the first apparatus, the method further includes: The second apparatus receives a third withdrawal request from the first apparatus, where the third withdrawal request is used by the first apparatus to request to withdraw the federated learning process.

Based on the second aspect or the third aspect, in a possible implementation, if the first verification result represents that verification succeeds, the method further includes:

The second apparatus sends a second test request to the apparatus other than the first apparatus, where the second test request indicates the apparatus other than the first apparatus to perform an accuracy test on the sixth global model; the second apparatus receives second local accuracy sent by the apparatus other than the first apparatus; the second apparatus determines second global accuracy based on the second local accuracy sent by the apparatus other than the first apparatus; and the second apparatus determines, based on the second global accuracy, whether performance recovery needs to be performed on the sixth global model. When the first verification result represents that verification succeeds, the second apparatus may further evaluate performance of the sixth global model, to ensure performance of the sixth global model.

Based on the second aspect or the third aspect, in a possible implementation, if performance recovery needs to be performed on the sixth global model, the method further includes: The second apparatus sends a second performance recovery indication to the first apparatus, where the second performance recovery indication indicates the first apparatus to perform performance recovery on the sixth global model; and the second apparatus receives a seventh global model from the first apparatus, where the seventh global model is obtained by performing gradient descent on the sixth global model based on public category data of the first apparatus. In this implementation, the first verification result represents that verification succeeds, but performance recovery needs to be performed on the sixth global model, and the second apparatus sends the second performance recovery indication to the first apparatus, so that the first apparatus performs performance recovery on the sixth global model to obtain the seventh global model, and sends the seventh global model to the second apparatus. This can avoid performance deterioration of the global model.

Based on the second aspect or the third aspect, in a possible implementation, the method further includes: The second apparatus sends a third test request to the apparatus other than the first apparatus, where the third test request indicates the apparatus other than the first apparatus to perform an accuracy test on the seventh global model; the second apparatus receives third local accuracy sent by the apparatus other than the first apparatus; the second apparatus determines third global accuracy based on the third local accuracy sent by the apparatus other than the first apparatus; the second apparatus determines, based on the third global accuracy, whether performance recovery needs to be performed on the seventh global model; and if performance recovery does not need to be performed on the seventh global model, the second apparatus sends a fourth withdrawal permission indication to the first apparatus, where the fourth withdrawal permission indication indicates that the first apparatus is allowed to withdraw the federated learning process. In this implementation, the second apparatus may evaluate performance of the seventh global model. When performance recovery does not need to be performed on the seventh global model, the second apparatus may indicate that the first apparatus is allowed to withdraw the federated learning process. Therefore, performance of the seventh global model is ensured. Optionally, before the second apparatus sends the fourth withdrawal permission indication to the first apparatus, the method further includes: The second apparatus receives a fourth withdrawal request from the first apparatus, where the fourth withdrawal request is used by the first apparatus to request to withdraw the federated learning process.

Based on the second aspect or the third aspect, in a possible implementation, if the first verification result represents that verification fails, the method further includes: The second apparatus sends an eighth global model and a second verification indication to the first apparatus, where the eighth global model is obtained by performing, by using a second group of weighted values, weighted fusion on the fourth global model and the global model obtained by performing gradient descent on the first global model by the apparatus other than the first apparatus, and the second verification indication indicates the first apparatus to perform unlearning performance verification on the eighth global model; and the second apparatus receives a second verification result from the first apparatus, where the second verification result is obtained by performing unlearning performance verification on the eighth global model. When the first verification result represents that verification fails, the second apparatus performs weighted fusion by using another group of weighted values to obtain the eighth global model, and sends the eighth global model to the first apparatus. Therefore, unlearning performance can be ensured, and overheads generated caused by model performance recovery can be reduced based on public category data learned by another apparatus.

A fourth aspect of this application provides a first apparatus, including:
a processing module, configured to: determine personalized category data of the first apparatus; determine an unlearning-completion level of a first global model on the personalized category data, where the first global model is a global model at a moment at which the first apparatus requests or performs unlearning determining; and determine, based on the unlearning-completion level, whether to perform federated unlearning for the personalized category data.

Based on the fourth aspect, in a possible implementation, the processing module is specifically configured to: if the unlearning-completion level is less than a first threshold, determine to perform federated unlearning for the personalized category data; or if the unlearning-completion level is greater than or equal to the first threshold, determine not to perform federated unlearning for the personalized category data.

Based on the fourth aspect, in a possible implementation, the processing module is specifically configured to: if the unlearning-completion level is less than or equal to a first threshold, determine to perform federated unlearning for the personalized category data; or if the unlearning-completion level is greater than the first threshold, determine not to perform federated unlearning for the personalized category data.

Based on the fourth aspect, in a possible implementation, the first apparatus further includes a transceiver module, and the transceiver module is configured to send an unlearning request to a second apparatus, where the unlearning request is used to request initiation of federated unlearning for the personalized category data.

Based on the fourth aspect, in a possible implementation, the first apparatus further includes a transceiver module, and the transceiver module is configured to send a first withdrawal indication to a second apparatus, where the first withdrawal indication notifies the second apparatus that the first apparatus withdraws a federated learning process.

Based on the fourth aspect, in a possible implementation, the unlearning-completion level of the first global model on the personalized category data is determined based on first accuracy and second accuracy, the first accuracy represents classification accuracy of the first global model on the personalized category data, the second accuracy represents classification accuracy of a second global model on the personalized category data, the second global model is a global model at a moment at which the first apparatus joins the federated learning process, and the moment at which the first apparatus requests or performs unlearning determining is later than the moment at which the first apparatus joins the federated learning process.

Based on the fourth aspect, in a possible implementation, the processing module is specifically configured to: track, in the federated learning process, improvement in classification accuracy corresponding to various types of category data of the first apparatus; and use, based on the improvement, category data with greatest improvement in classification accuracy as the personalized category data, or use category data whose corresponding classification accuracy is higher than a preset threshold as the personalized category data.

Based on the fourth aspect, in a possible implementation, the first apparatus further includes a transceiver module, and the transceiver module is configured to send an auxiliary determining request to the second apparatus, where the auxiliary determining request is used to request the second apparatus to assist the first apparatus in determining the personalized category data; and receive a third global model from the second apparatus, where the third global model is obtained by performing weighted fusion on a global model obtained by performing gradient descent on the first global model by an apparatus other than the first apparatus; and the processing module is specifically configured to: determine variation of classification accuracy of the third global model on the various types of category data of the first apparatus relative to classification accuracy of the first global model on the various types of category data of the first apparatus; and use, based on the variation, category data whose classification accuracy has decreased as the personalized category data, or use, based on the variation, category data whose classification accuracy has decreased most as the personalized category data, or use, based on the variation, category data whose classification accuracy has decreased by a degree greater than a preset threshold as the personalized category data.

Based on the fourth aspect, in a possible implementation, the first apparatus further includes a transceiver module, and the transceiver module is configured to send an unlearning determining request to the second apparatus, where the unlearning determining request is used to request to determine whether to perform federated unlearning; and receive a training contribution degree from the second apparatus, where the training contribution degree represents the extent of contribution of the first apparatus to model training; and the processing module is further configured to: determine, based on the training contribution degree, whether to perform federated unlearning; and if yes, trigger to perform the step of determining the personalized category data of the first apparatus.

Based on the fourth aspect, in a possible implementation, the first apparatus further includes a transceiver module, and the transceiver module is configured to: if the first apparatus determines to perform federated unlearning for the personalized category data, receive a start indication from the second apparatus, where the start indication indicates the first apparatus to initiate federated unlearning for the personalized category data; the processing module is further configured to perform gradient ascent on the first global model based on the personalized category data, to obtain a fourth global model, where an unlearning-completion level of the fourth global model on the personalized category data is greater than the first threshold, or an unlearning-completion level of the fourth global model on the personalized category data is greater than or equal to the first threshold; and the transceiver module is further configured to send the fourth global model to the second apparatus.

Based on the fourth aspect, in a possible implementation, the unlearning-completion level of the fourth global model on the personalized category data is determined based on the second accuracy and third accuracy, the second accuracy represents the classification accuracy of the second global model on the personalized category data, the third accuracy represents classification accuracy of the fourth global model on the personalized category data, and the second global model is the global model at the moment at which the first apparatus joins the federated learning process.

Based on the fourth aspect, in a possible implementation, the first apparatus further includes a transceiver module, and the transceiver module is configured to receive a first withdrawal permission indication from the second apparatus, where the first withdrawal permission indication indicates that the first apparatus is allowed to withdraw the federated learning process. Optionally, the transceiver module is further configured to send a first withdrawal request to the second apparatus, where the first withdrawal request is used by the first apparatus to request to withdraw the federated learning process.

Based on the fourth aspect, in a possible implementation, the first apparatus further includes a transceiver module, and the transceiver module is configured to receive a first performance recovery indication from the second apparatus, where the first performance recovery indication indicates the first apparatus to perform performance recovery on the fourth global model; the processing module is further configured to perform gradient descent on the fourth global model based on public category data of the first apparatus, to obtain a fifth global model; and the transceiver module is further configured to send the fifth global model to the second apparatus.

Based on the fourth aspect, in a possible implementation, the first apparatus further includes a transceiver module, and the transceiver module is configured to receive a second withdrawal permission indication from the second apparatus, where the second withdrawal permission indication indicates that the first apparatus is allowed to withdraw the federated learning process. Optionally, the transceiver module is further configured to send a second withdrawal request to the second apparatus, where the first withdrawal request is used by the first apparatus to request to withdraw the federated learning process.

Based on the fourth aspect, in a possible implementation, the first apparatus further includes a transceiver module, and the transceiver module is configured to receive a sixth global model and a first verification indication from the second apparatus, where the sixth global model is obtained by performing, by using a first group of weighted values, weighted fusion on the fourth global model and the global model obtained by performing gradient descent on the first global model by the apparatus other than the first apparatus, and the first verification indication indicates the first apparatus to perform unlearning performance verification on the sixth global model; the processing module is further configured to perform unlearning performance verification on the sixth global model, to obtain a first verification result; and the transceiver module is further configured to send the first verification result to the second apparatus.

Based on the fourth aspect, in a possible implementation, the first apparatus further includes a transceiver module, and the transceiver module is configured to: if the first verification result represents that verification succeeds, send a second withdrawal indication to the second apparatus, where the second withdrawal indication notifies the second apparatus that the first apparatus withdraws the federated learning process.

Based on the fourth aspect, in a possible implementation, the first apparatus further includes a transceiver module, and the transceiver module is configured to: if the first verification result represents that verification succeeds, receive a third withdrawal permission indication from the second apparatus, where the third withdrawal permission indication indicates that the first apparatus is allowed to withdraw the federated learning process. Optionally, the transceiver module is further configured to send a third withdrawal request to the second apparatus, where the third withdrawal request is used by the first apparatus to request to withdraw the federated learning process.

Based on the fourth aspect, in a possible implementation, the first apparatus further includes a transceiver module, and the transceiver module is configured to: if the first verification result represents that verification succeeds, receive a second performance recovery indication from the second apparatus, where the second performance recovery indication indicates the first apparatus to perform performance recovery on the sixth global model; the processing module is further configured to perform gradient descent on the sixth global model based on public category data of the first apparatus, to obtain a seventh global model; and the transceiver module is further configured to send the seventh global model to the second apparatus.

Based on the fourth aspect, in a possible implementation, the first apparatus further includes a transceiver module, and the transceiver module is configured to receive a fourth withdrawal permission indication from the second apparatus, where the fourth withdrawal permission indication indicates that the first apparatus is allowed to withdraw the federated learning process. Optionally, the transceiver module is further configured to send a fourth withdrawal request to the second apparatus, where the fourth withdrawal request is used by the first apparatus to request to withdraw the federated learning process.

Based on the fourth aspect, in a possible implementation, the first apparatus further includes a transceiver module, and the transceiver module is configured to: if the first verification result represents that verification fails, receive an eighth global model and a second verification indication from the second apparatus, where the eighth global model is obtained by performing, by using a second group of weighted values, weighted fusion on the fourth global model and the global model obtained by performing gradient descent on the first global model by the apparatus other than the first apparatus, and the second verification indication indicates the first apparatus to perform unlearning performance verification on the eighth global model; the processing module is further configured to perform unlearning performance verification on the eighth global model, to obtain a second verification result; and the transceiver module is further configured to send the second verification result to the second apparatus.

A fifth aspect of this application provides a second apparatus, including:
a transceiver module, configured to receive an unlearning request from a first apparatus, where the unlearning request is used to request initiation of federated unlearning for personalized category data of the first apparatus, an unlearning-completion level of a first global model on the personalized category data is less than a first threshold, or an unlearning-completion level of a first global model on the personalized category data is less than or equal to a first threshold, and the first global model is a global model at a moment at which the first apparatus requests or performs unlearning determining.

A sixth aspect of this application provides a second apparatus, including:
a transceiver module, configured to receive a first withdrawal indication from a first apparatus, where the first withdrawal indication notifies the second apparatus that the first apparatus withdraws a federated learning process, an unlearning-completion level of a first global model on personalized category data is greater than a first threshold, or an unlearning-completion level of a first global model on personalized category data is greater than or equal to a first threshold, and the first global model is a global model at a moment at which the first apparatus requests or performs unlearning determining.

Based on the fifth aspect or the sixth aspect, in a possible implementation, the unlearning-completion level of the first global model on the personalized category data is determined based on first accuracy and second accuracy, the first accuracy represents classification accuracy of the first global model on the personalized category data, the second accuracy represents classification accuracy of a second global model on the personalized category data, the second global model is a global model at a moment at which the first apparatus joins the federated learning process, and the moment at which the first apparatus requests or performs unlearning determining is later than the moment at which the first apparatus joins the federated learning process.

Based on the fifth aspect or the sixth aspect, in a possible implementation, the transceiver module is further configured to: receive an auxiliary determining request from the first apparatus, where the auxiliary determining request is used to request the second apparatus to assist the first apparatus in determining the personalized category data; and send a third global model to the first apparatus, where the third global model is obtained by performing weighted fusion on a global model obtained by performing gradient descent on the first global model by an apparatus other than the first apparatus, and the third global model is used by the first apparatus to determine the personalized category data.

Based on the fifth aspect or the sixth aspect, in a possible implementation, the transceiver module is further configured to: receive an unlearning determining request from the first apparatus, where the unlearning determining request is used to request to determine whether to perform federated unlearning; and send a training contribution degree to the first apparatus, where the training contribution degree represents the extent of contribution of the first apparatus to model training.

Based on the fifth aspect or the sixth aspect, in a possible implementation, the transceiver module is further configured to: send a start indication to the first apparatus, where the start indication indicates the first apparatus to initiate federated unlearning for the personalized category data; and receive a fourth global model from the first apparatus, where the fourth global model is obtained by the first apparatus by performing gradient ascent on the first global model based on the personalized category data, and an unlearning-completion level of the fourth global model on the personalized category data is greater than the first threshold.

Based on the fifth aspect or the sixth aspect, in a possible implementation, the unlearning-completion level of the fourth global model on the personalized category data is determined based on the second accuracy and third accuracy, the second accuracy represents the classification accuracy of the second global model on the personalized category data, the third accuracy represents classification accuracy of the fourth global model on the personalized category data, and the second global model is the global model at the moment at which the first apparatus joins the federated learning process.

Based on the fifth aspect or the sixth aspect, in a possible implementation, the transceiver module is further configured to: send a first test request to the apparatus other than the first apparatus, where the first test request indicates the apparatus other than the first apparatus to perform an accuracy test on the fourth global model; and receive first local accuracy sent by the apparatus other than the first apparatus; and the second apparatus further includes a processing module, and the processing module is configured to determine first global accuracy based on the first local accuracy sent by the apparatus other than the first apparatus; and determine based on the first global accuracy, whether the fourth global model needs performance recovery.

Based on the fifth aspect or the sixth aspect, in a possible implementation, the transceiver module is further configured to send a first withdrawal permission indication to the first apparatus, where the first withdrawal permission indication indicates that the first apparatus is allowed to withdraw the federated learning process. Optionally, the transceiver module is further configured to receive a first withdrawal request from the first apparatus, where the first withdrawal request is used by the first apparatus to request to withdraw the federated learning process.

Based on the fifth aspect or the sixth aspect, in a possible implementation, the transceiver module is further configured to send the fourth global model to the apparatus other than the first apparatus, where the fourth global model is used by the apparatus other than the first apparatus to continue to perform the federated learning process.

Based on the fifth aspect or the sixth aspect, in a possible implementation, if the fourth global model needs performance recovery, the transceiver module is further configured to: send a first performance recovery indication to the first apparatus, where the first performance recovery indication indicates the first apparatus to perform performance recovery on the fourth global model; and receive a fifth global model from the first apparatus, where the fifth global model is obtained by performing gradient descent on the fourth global model based on public category data of the first apparatus.

Based on the fifth aspect or the sixth aspect, in a possible implementation, if the fifth global model does not need performance recovery, the transceiver module is further configured to send a second withdrawal permission indication to the first apparatus, where the second withdrawal permission indication indicates that the first apparatus is allowed to withdraw the federated learning process. Optionally, the transceiver module is further configured to receive a second withdrawal request from the first apparatus, where the second withdrawal request is used by the first apparatus to request to withdraw the federated learning process.

Based on the fifth aspect or the sixth aspect, in a possible implementation, if the fifth global model does not need performance recovery, the transceiver module is further configured to send the fifth global model to the apparatus other than the first apparatus, where the fifth global model is used by the apparatus other than the first apparatus to continue to perform the federated learning process.

Based on the fifth aspect or the sixth aspect, in a possible implementation, the transceiver module is further configured to send a sixth global model and a first verification indication to the first apparatus, where the sixth global model is obtained by performing, by using a first group of weighted values, weighted fusion on the fourth global model and the global model obtained by performing gradient descent on the first global model by the apparatus other than the first apparatus, and the first verification indication indicates the first apparatus to perform unlearning performance verification on the sixth global model; and receive a first verification result from the first apparatus, where the first verification result is obtained by performing unlearning performance verification on the sixth global model.

Based on the fifth aspect or the sixth aspect, in a possible implementation, the transceiver module is further configured to: if the first verification result represents that verification succeeds, receive a second withdrawal indication from the first apparatus, where the second withdrawal indication notifies the second apparatus that the first apparatus withdraws the federated learning process.

Based on the fifth aspect or the sixth aspect, in a possible implementation, the transceiver module is further configured to: if the first verification result represents that verification succeeds, send a third withdrawal permission indication to the first apparatus, where the third withdrawal permission indication indicates that the first apparatus is allowed to withdraw the federated learning process. Optionally, the transceiver module is further configured to receive a third withdrawal request from the first apparatus, where the third withdrawal request is used by the first apparatus to request to withdraw the federated learning process.

Based on the fifth aspect or the sixth aspect, in a possible implementation, the transceiver module is further configured to: if the first verification result represents that verification succeeds, send a second test request to the apparatus other than the first apparatus, where the second test request indicates the apparatus other than the first apparatus to perform an accuracy test on the sixth global model; and receive second local accuracy sent by the apparatus other than the first apparatus; and the second apparatus further includes a processing module, and the processing module is configured to determine second global accuracy based on the second local accuracy sent by the apparatus other than the first apparatus; and determine, based on the second global accuracy, whether performance recovery needs to be performed on the sixth global model.

Based on the fifth aspect or the sixth aspect, in a possible implementation, the transceiver module is further configured to: if performance recovery needs to be performed on the sixth global model, send a second performance recovery indication to the first apparatus, where the second performance recovery indication indicates the first apparatus to perform performance recovery on the sixth global model; and receive a seventh global model from the first apparatus, where the seventh global model is obtained by performing gradient descent on the sixth global model based on public category data of the first apparatus.

Based on the fifth aspect or the sixth aspect, in a possible implementation, the transceiver module is further configured to: send a third test request to the apparatus other than the first apparatus, where the third test request indicates the apparatus other than the first apparatus to perform an accuracy test on the seventh global model; and receive third local accuracy sent by the apparatus other than the first apparatus; the second apparatus further includes a processing module, and the processing module is further configured to determine third global accuracy based on the third local accuracy sent by the apparatus other than the first apparatus; and determine, based on the third global accuracy, whether performance recovery needs to be performed on the seventh global model; and the transceiver module is further configured to: if performance recovery does not need to be performed on the seventh global model, send a fourth withdrawal permission indication to the first apparatus, where the fourth withdrawal permission indication indicates that the first apparatus is allowed to withdraw the federated learning process. Optionally, the transceiver module is further configured to receive a fourth withdrawal request from the first apparatus, where the fourth withdrawal request is used by the first apparatus to request to withdraw the federated learning process.

Based on the fifth aspect or the sixth aspect, in a possible implementation, the transceiver module is further configured to: if the first verification result represents that verification fails, send an eighth global model and a second verification indication to the first apparatus, where the eighth global model is obtained by performing, by using a second group of weighted values, weighted fusion on the fourth global model and the global model obtained by performing gradient descent on the first global model by the apparatus other than the first apparatus, and the second verification indication indicates the first apparatus to perform unlearning performance verification on the eighth global model; and receive a second verification result from the first apparatus, where the second verification result is obtained by performing unlearning performance verification on the eighth global model.

A seventh aspect of this application provides a first apparatus. The first apparatus includes a processor and a memory. The memory stores a computer program or computer instructions, and the processor is configured to invoke and run the computer program or the computer instructions stored in the memory, to enable the processor to implement any one of the implementations of the first aspect.

Optionally, the first apparatus further includes a transceiver, and the processor is configured to control the transceiver to receive or send a signal.

An eighth aspect of this application provides a second apparatus. The second apparatus includes a processor and a memory. The memory stores a computer program or computer instructions, and the processor is configured to invoke and run the computer program or the computer instructions stored in the memory, to enable the processor to implement any one of the implementations of the second aspect or the third aspect.

Optionally, the second apparatus further includes a transceiver, and the processor is configured to control the transceiver to receive or send a signal.

A ninth aspect of this application provides a first apparatus, including a processor and an interface circuit. The processor is configured to: communicate with another apparatus through the interface circuit, and perform the method in the first aspect. There are one or more processors.

A tenth aspect of this application provides a second apparatus, including a processor and an interface circuit. The processor is configured to: communicate with another apparatus through the interface circuit, and perform the method in the second aspect or the third aspect. There are one or more processors.

An eleventh aspect of this application provides a first apparatus, including a processor, configured to: connect to a memory, and invoke a program stored in the memory, to perform the method in the first aspect. The memory may be located inside the first apparatus, or may be located outside the first apparatus. In addition, there are one or more processors.

A twelfth aspect of this application provides a second apparatus, including a processor, configured to: connect to a memory, and invoke a program stored in the memory, to perform the method in the second aspect or the third aspect. The memory may be located inside the second apparatus, or may be located outside the second apparatus. In addition, there are one or more processors.

In an implementation, the first apparatus in the first aspect, the fourth aspect, the seventh aspect, the ninth aspect, or the eleventh aspect may be a chip or a chip system.

In an implementation, the second apparatus in the second aspect, the third aspect, the fifth aspect, the sixth aspect, the eighth aspect, the tenth aspect, or the twelfth aspect may be a chip or a chip system.

A thirteenth aspect of this application provides a computer program product including computer instructions. When the computer program product runs on a computer, the computer is enabled to perform any one of the implementations of any one of the first aspect to the third aspect.

A fourteenth aspect of this application provides a computer-readable storage medium, including computer instructions. When the instructions are run on a computer, the computer is caused to perform any one of the implementations of the first aspect to the third aspect.

A fifteenth aspect of this application provides a chip apparatus, including a processor, configured to invoke a computer program or computer instructions in a memory, to enable the processor to perform any one of the implementations according to any one of the first aspect to the third aspect.

Optionally, the processor is coupled to the memory through an interface.

A sixteenth aspect of this application provides a communication system. The communication system includes a first apparatus and a second apparatus. The first apparatus is configured to perform the method shown in the first aspect, and the second apparatus is configured to perform the method shown in the second aspect or the third aspect.

It can be known from the foregoing technical solution that the first apparatus determines personalized category data of the first apparatus. Then, the first apparatus determines an unlearning-completion level of a first global model on the personalized category data, where the first global model is a global model at a moment at which the first apparatus requests or performs unlearning determining. The first apparatus determines, based on the unlearning-completion level, whether to perform federated unlearning for the personalized category data. In this way, whether federated unlearning needs to be performed can be effectively determined, to avoid overheads respectively caused by unnecessary federated unlearning and model performance recovery. Thus, federated unlearning is better achieved.

### BRIEF DESCRIPTION OF DRAWINGS

FIG. 1 is a diagram of a communication system according to an embodiment of this application;
FIG. 2A is another diagram of a communication system according to an embodiment of this application;
FIG. 2B is still another diagram of a communication system according to an embodiment of this application;
FIG. 2C is still another diagram of a communication system according to an embodiment of this application;
FIG. 3 is a diagram of an embodiment of a data processing method according to an embodiment of this application;
FIG. 4 is a diagram of another embodiment of a data processing method according to an embodiment of this application;
FIG. 5A and FIG. 5B are a diagram of still another embodiment of a data processing method according to an embodiment of this application;
FIG. 6A to FIG. 6C are a diagram of yet another embodiment of a data processing method according to an embodiment of this application;
FIG. 7 is a diagram of a structure of a first apparatus according to an embodiment of this application;
FIG. 8 is a diagram of a structure of a second apparatus according to an embodiment of this application;
FIG. 9 is a diagram of a structure of an apparatus according to an embodiment of this application;
FIG. 10 is a diagram of another structure of an apparatus according to an embodiment of this application; and
FIG. 11 is a diagram of still another structure of an apparatus according to an embodiment of this application.

### DESCRIPTION OF EMBODIMENTS

Embodiments of this application provide a data processing method and a related apparatus, so that a first apparatus determines an unlearning-completion level of a first global model on personalized category data, and determines, based on the unlearning-completion level, whether to perform federated unlearning for the personalized category data. In this way, whether federated unlearning needs to be performed can be effectively determined, to avoid overheads respectively caused by unnecessary federated unlearning and model performance recovery. Thus, federated unlearning is better achieved.

The following clearly describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

It may be understood that, in this application, an "indication" may include a direct indication, an indirect indication, an explicit indication, and an implicit indication. When a piece of indication information is described as indicating A, it may be understood as that the indication information carries A, directly indicates A, or indirectly indicates A.

The technical solutions of this application may be applied to a cellular communication system related to the 3rd generation partnership project (3rd generation partnership project, 3GPP), for example, a fourth generation (4th generation, 4G) communication system, a fifth generation (5th generation, 5G) communication system, or a communication system after the fifth generation communication system, for example, a sixth generation communication system. For example, the fourth generation communication system may include a long term evolution (long term evolution, LTE) communication system. The fifth generation communication system may include a new radio (new radio, NR) communication system. The technical solutions of this application may also be applied to a wireless fidelity (wireless fidelity, Wi-Fi) system, a communication system that supports convergence of a plurality of wireless technologies, a device-to-device (device-to-device, D2D) system, a vehicle-to-everything (vehicle to everything, V2X) communication system, a satellite communication system, and the like. The wireless communication system in this application further includes but is not limited to a narrow band-internet of things (narrow band-internet of things, NB-IoT) system.

A communication system to which the technical solutions of this application are applicable includes a first apparatus and a second apparatus. Optionally, the communication system further includes an apparatus other than the first apparatus. The first apparatus and the another apparatus participate in federated learning, and report, to the second apparatus through federated learning, local models obtained through local training by all apparatuses. The second apparatus fuses the local models reported by all the apparatus to obtain a global model.

In a possible implementation, the first apparatus is a terminal device, and the second apparatus is a network device. Optionally, the another apparatus is a terminal device.

In another possible implementation, the first apparatus is a terminal device, and the second apparatus is a cloud server. Optionally, the another apparatus is a terminal device.

In still another possible implementation, the first apparatus is a first terminal device, and the second apparatus is also the first terminal device. Optionally, the another apparatus is a third terminal device.

The foregoing shows two possible implementations of the first apparatus and the second apparatus. Other implementations are still applicable to this application, and the foregoing example does not constitute a limitation on this application.

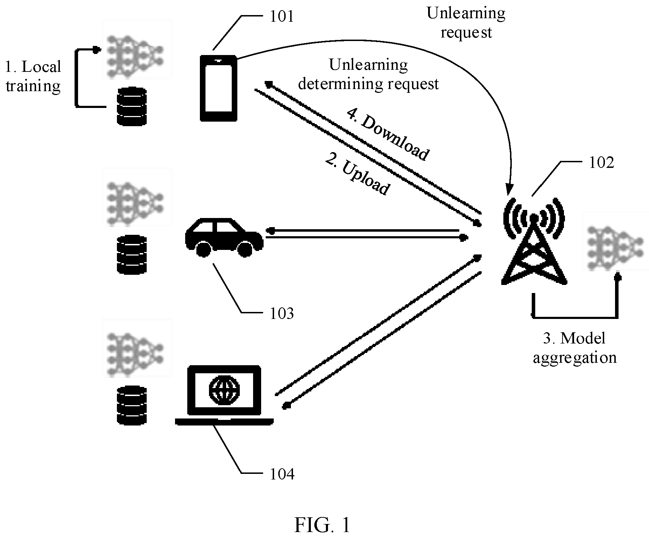

FIG. 1 is a diagram of a communication system according to an embodiment of this application. As shown in FIG. 1, a first apparatus is a mobile phone 101, and a second apparatus is a base station 102. More apparatuses include a car 103 and a notebook 104. The following describes a process in which the first apparatus, the second apparatus, and the more apparatuses perform federated learning. Step 1: The mobile phone 101, the car 103, and the notebook 104 may separately perform local training based on local data, to obtain local models. Step 2: The mobile phone 101, the car 103, and the notebook 104 separately send corresponding local models to the base station 102. Step 3: The base station 102 may collect a plurality of local models, and fuse the plurality of local models to obtain a global model. Step 4: The base station 102 separately sends the global model to the mobile phone 101, the car 103, and the notebook 104. Step 1 to step 4 may be repeatedly performed until the global model is converged or a quantity of training rounds reaches an upper limit.

This application may be applied to a scenario in which federated learning is performed in a wireless environment. Specifically, it is considered that there is a specific quantity of wireless devices in a network, for example, as shown in FIG. 1, the mobile phone 101 and the base station 102. These devices may communicate with each other in a wireless manner. As shown in FIG. 1, devices respectively corresponding to a user side and a network side perform federated learning training to obtain a classification model. That is, the global model is a classification model, and the classification model is used to classify data. A target user (for example, the mobile phone 101 shown in FIG. 1) has personalized category data, where the personalized category data refers to category data that is independently owned by the target user and that is different from that owned by another user. For example, a local dataset of the target user includes public category data and personalized category data, and the public category data may be understood as category data that is also owned by another user participating in federated learning. The personalized category data is category data unique to the target user. The target user initiates an unlearning request. It should be noted that, a prerequisite for the target user to initiate the unlearning request is that the target user has the personalized category data. On the premise that complete unlearning for the personalized category data is performed, the communication system needs to maximize classification accuracy of the public category data as much as possible, and reduce overheads respectively caused by federated unlearning and model performance recovery. Therefore, how to better achieve federated unlearning is worth considering, for example, how to avoid overheads of unnecessary federated unlearning and model performance recovery. This application provides a corresponding technical solution, to verify necessity of federated unlearning, and avoid overheads generated by unnecessary federated unlearning and model performance recovery. For details, refer to related descriptions in the following embodiments.

Recently, many relevant laws require that users participating in model training have permission to apply for deleting data and let a model forget data of the model, for example, European Union General Data Protection Regulation, California Consumer Privacy Act in United States, and Canada Privacy Legislation. Therefore, unlearning has begun to attract attention from academia and industry. It studies a method of inducing model selective memory loss, with a goal of deleting all traces of data of a specific user without affecting performance. Then, unlearning is often accompanied by overheads of unlearning and degradation of model performance. Difficulties of unlearning are mainly due to randomness and incrementality in a training process. For unlearning, in addition to the foregoing two difficulties, difficulties that training data cannot be directly accessed and information coupling is caused by iterative training are further faced. Therefore, many unlearning methods oriented to a centralized artificial intelligence (artificial intelligence, AI) system cannot be used in a distributed federated learning scenario. Therefore, for the federated learning scenario, the following problems need to be resolved to implement federated unlearning: 1. How to reduce overheads generated by federated unlearning and model performance recovery on the premise that the personalized category data of the target user is forgotten; and 2. How to verify a degree of forgetting in a distributed manner. This application provides a corresponding technical solution, to implement federated unlearning for personalized category data, and avoid overheads respectively caused by unnecessary federated unlearning and model performance recovery due to excessive unlearning. For details, refer to related descriptions in the following embodiments.

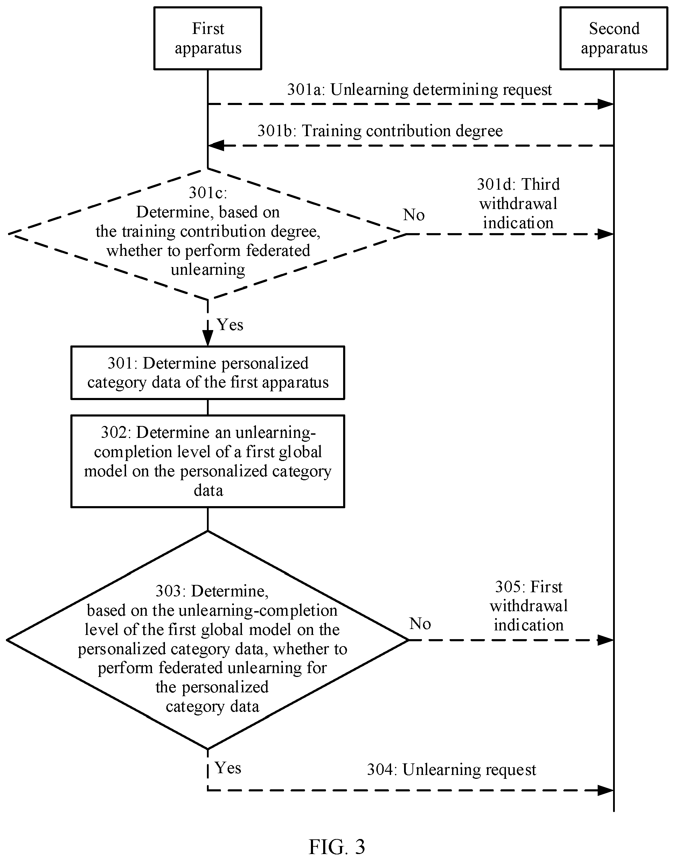

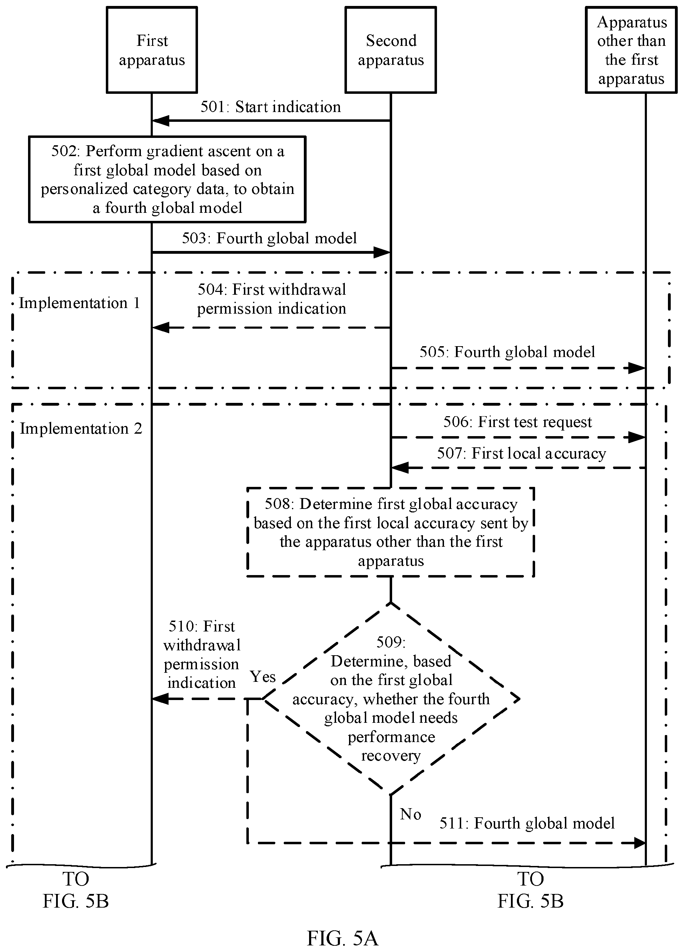

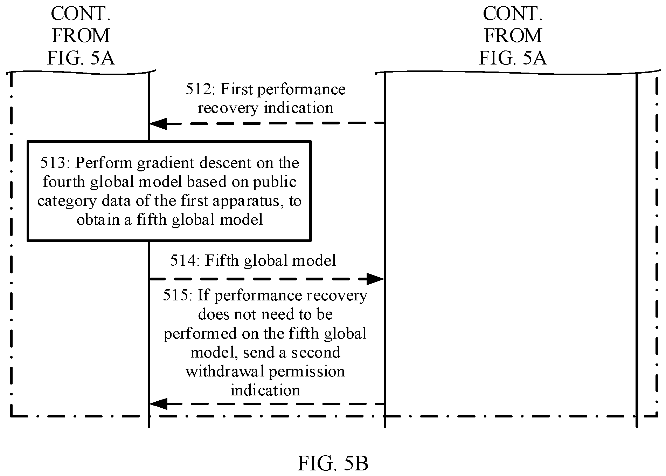

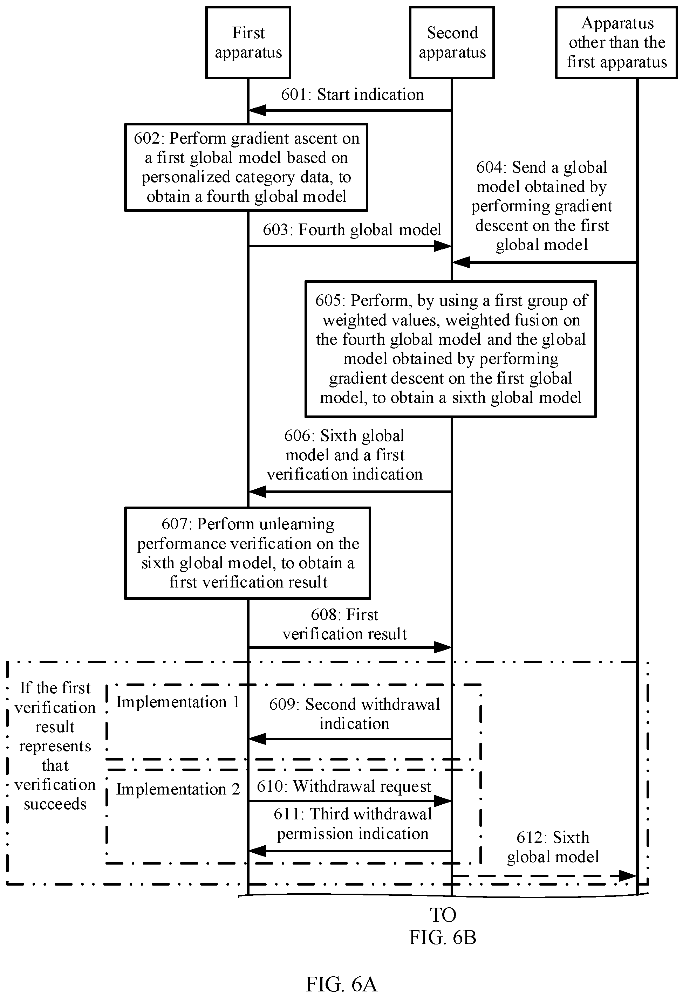

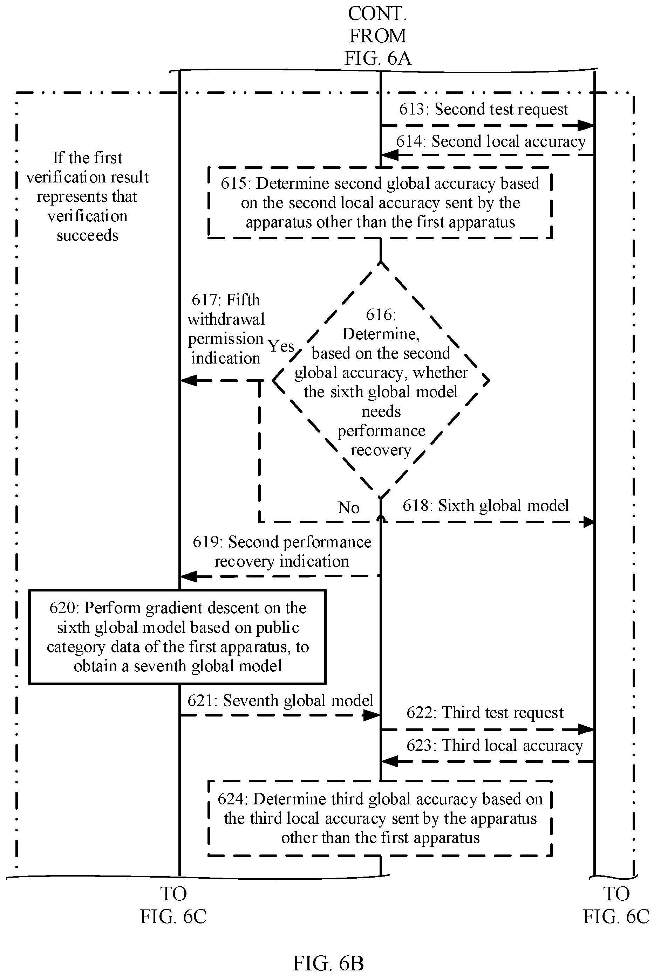

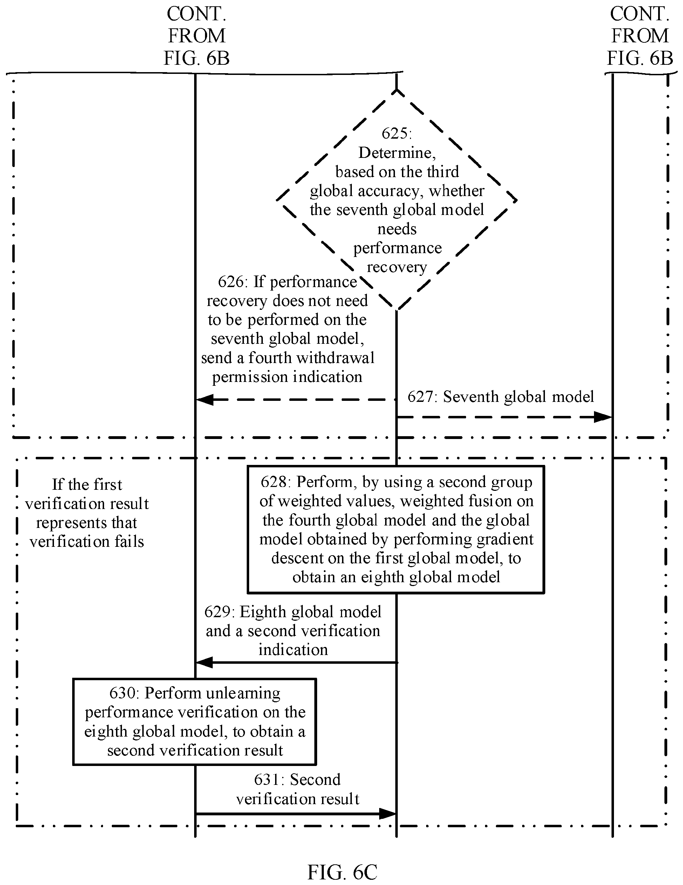

In the following embodiments, the embodiment shown in FIG. 3 mainly shows a necessity verification solution of federated unlearning. Therefore, an unnecessary federated unlearning scenario is effectively avoided, and overheads respectively generated by federated unlearning and model performance recovery are avoided. Thus, federated unlearning is better performed. FIG. 5A and FIG. 5B and FIG. 6A to FIG. 6C respectively show two possible federated unlearning solutions according to this application. Therefore, efficient federated unlearning is achieved.

The following describes a terminal device and a network device in this application.

The terminal device is also referred to as user equipment (user equipment, UE), a mobile station (mobile station, MS), a mobile terminal (mobile terminal, MT), customer premise equipment (customer premise equipment, CPE), or the like. The terminal device is a device that includes a wireless communication function (providing voice/data connectivity to a user), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self driving may be an uncrewed aerial vehicle, a helicopter, or an airplane. For example, the wireless terminal in the internet of vehicles may be a vehicle-mounted device, a vehicle equipment, a vehicle-mounted module, a vehicle, or a ship. The wireless terminal in industrial control may be a camera, a robot, a robotic arm, or the like. The wireless terminal in the smart home may be a television, an air conditioner, a sweeper, a speaker, a set-top box, or the like.

It should be noted that the terminal device may be a device or an apparatus with a chip, a device or an apparatus integrated with a circuit, or a chip, a module, or a control unit in the device or the apparatus shown above. This is not specifically limited in this application.

The network device is a device that is deployed in a radio access network and that provides a wireless communication function for the terminal device. The network device may also be referred to as an access network (radio access network, RAN) entity, an access node, a network node, a communication apparatus, or the like.

Specifically, the network device may be an access network device in a cellular system related to the 3rd generation partnership project (3rd generation partnership project, 3GPP), for example, a 4th generation (fourth-generation, 4G) mobile communication system or a 5G mobile communication system. Alternatively, the network device may be an access network device in an open radio access network (open RAN, O-RAN, or ORAN) or a cloud radio access network (cloud radio access network, CRAN). Alternatively, the network device may be an access network device in a communication system obtained by converging two or more of the foregoing communication systems.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a wireless controller in a CRAN scenario, a wireless backhaul node, a transmission point (transmission point, TP), or a transmission and receiving point (transmission and receiving point, TRP). The network device may alternatively be an access network device in a 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in a 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio unit, for example, in a remote radio unit (remote radio unit, RRU), an active antenna unit (active antenna unit, AAU), or a remote radio head (remote radio head, RRH). Alternatively, the network device may be a server, a wearable device, a vehicle, a vehicle-mounted device, or the like. For example, the network device may be a road side unit (road side unit, RSU) in a V2X technology.

It should be noted that in different systems, the CU (or the CU-CP and the CU-UP), the DU, or the RU may have different names, but persons skilled in the art may understand meanings of the names. For example, in an open radio access network (open radio access network, ORAN) system, the CU may also be referred to as an open central unit (open central unit, O-CU) or an open CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open CU-CP, the central unit-user plane (central unit-user plane, CU-UP) may also be referred to as an open central unit-user plane (open central unit-user plane, O-CU-UP) or an open CU-UP, and the RU may also be referred to as an open radio unit (open radio unit, O-RU). This is not specifically limited in this application. Any unit in the CU, the CU-CP, the CU-UP, the DU, and the RU in this application may be implemented by a software module, a hardware module, or a combination of the software module and the hardware module.

Optionally, for network elements in the ORAN system, each network element may implement a protocol layer function shown in Table 1.

**Table 1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), media access control (media access control, MAC), and physical higher layer (PHY-high) |
| O-RU | Physical lower layer (PHY-low) |

It should be noted that the network device may be one or more network elements shown in Table 1. This is not specifically limited in this application.

It should be noted that Table 1 is merely an example. During actual application, a protocol layer function supported by each network element is not limited. For example, each network element may support more protocol layer functions, or the protocol layer function supported by each network element is specifically configured based on an actual situation. This is not specifically limited in this application.

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has a part of functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer above the PDCP layer (for example, an RRC layer and/or an SDAP layer). The DU is configured to implement a function of a protocol layer below the PDCP layer (for example, an RLC layer, a MAC layer, and/or a physical (physical, PHY) layer). For another example, the CU is configured to implement functions of protocol layers above a PDCP layer (for example, an RRC layer and/or an SDAP layer), and the DU is configured to implement functions of the PDCP layer and protocol layers below the PDCP layer (for example, an RLC layer, a MAC layer, and/or a PHY layer).

When the CU includes the CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may perform interaction with a network element configured to implement a control plane function in the core network. The network element configured to implement the control plane function in the core network may be an access and mobility function network element, for example, an access and mobility management function (access and mobility management function, AMF) in the 5G mobile communication system. The access and mobility function network element is configured to be responsible for mobility management in a mobile network, for example, position update of a terminal device, network registration of the terminal device, and handover of the terminal device. The CU-UP may perform interaction with a network element configured to implement a user plane function in the core network. The network element configured to implement the user plane function in the core network, for example, a user function (user plane function, UPF) in the 5G mobile communication system, is configured to be responsible for forwarding and receiving data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of a protocol layer. For example, a part of functions of the RLC layer and functions of a protocol layer above the RLC layer are set on the CU, and remaining functions of the RLC layer and functions of a protocol layer below the RLC layer are set on the DU. For another example, functions of the CU or the DU may alternatively be obtained through division based on a service type or another system requirement. For example, division is performed based on a latency, a function whose processing time needs to satisfy a small latency requirement is set on the DU, and a function whose processing time does not need to satisfy the latency requirement is set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions are closer to the MAC layer. The lower-layer function of the physical layer may include the other part of functions of the physical layer, and the other part of functions are closer to an intermediate radio frequency side.

Optionally, the network device may alternatively be a core network device. The core network device is responsible for access control, registration management, service management, mobility management, and the like for the terminal device to access a network. For example, the core network device is the AMF.

It should be noted that the network device may be the device or the apparatus shown above, or may be a component (for example, a chip), a module, or a unit in the device or the apparatus shown above. This is not specifically limited in this application.

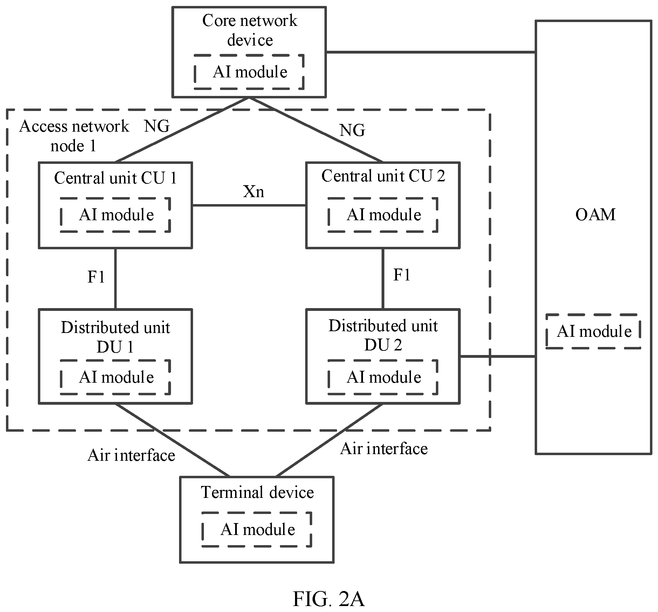

In the communication system provided in this application, an artificial intelligence (artificial intelligence, AI) network element may be introduced to implement a part or all of AI-related operations. The AI network element may also be referred to as an AI node, an AI device, an AI entity, an AI module, an AI model, an AI unit, or the like. The AI network element may be built in a network element in the communication system. For example, the AI network element may be an AI module built in the access network device, the core network device, a cloud server, or a network management system (operation, administration and maintenance, OAM), to implement an AI-related function. The OAM may be used as operation, administration, and maintenance of the core network device and/or operation, administration, and maintenance of the access network device. Alternatively, the AI network element may be an independently disposed network element in the communication system. Optionally, the terminal device or a chip built in the terminal device may alternatively include an AI entity, configured to implement an AI-related function. With reference to FIG. 2A, the following describes another communication system provided in an embodiment of this application.

FIG. 2A is another diagram of a communication system according to an embodiment of this application. As shown in FIG. 2A, network elements in the communication system are connected to each other through an interface (for example, an NG interface or an Xn interface) or an air interface. One or more AI modules (for clarity, FIG. 2A shows only one AI module) are disposed in these network element nodes (for example, one or more devices in a core network device, an access network node (a RAN node), a terminal, or an OAM). The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

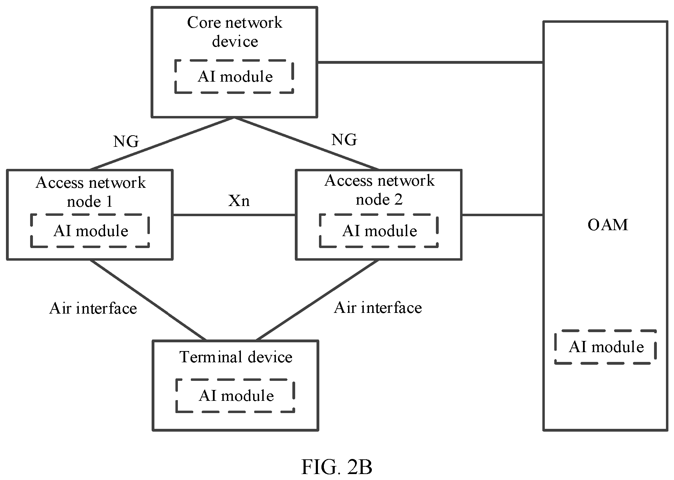

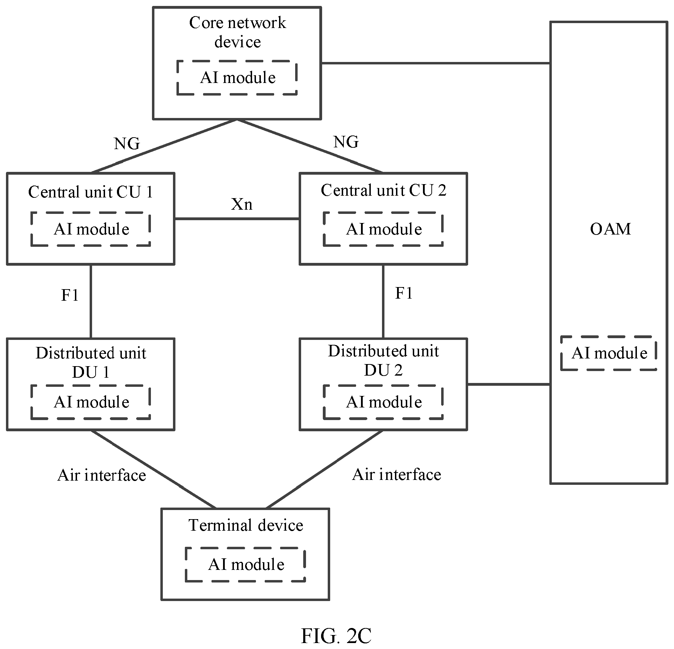

It should be noted that the access network node shown in FIG. 2A above may be used as a whole, or the access network node shown in FIG. 2A above uses an architecture in which the CU and the DU are separated. FIG. 2B is a diagram of a communication system in which an access network node is used as a whole and the access network node is connected to a terminal device. FIG. 2C is a diagram of a communication system in which an access network node uses an architecture in which a CU and a DU are separated.

The following describes the technical solutions of this application with reference to specific embodiments.

FIG. 3 is a diagram of an embodiment of a data processing method according to an embodiment of this application. Refer to FIG. 3. The method includes the following steps.

301: A first apparatus determines personalized category data of the first apparatus.

The personalized category data of the first apparatus is category data different from that of another apparatus participating in federated learning, that is, category data unique to the first apparatus. Generally, the first apparatus includes public category data and personalized category data. The public category data may be category data jointly owned by the first apparatus and the another apparatus participating in federated learning, and the personalized category data is category data unique to the first apparatus. The first apparatus and the another apparatus participating in federated learning jointly perform federated learning to implement training of a global model. For example, the global model may be a classification model, and the classification model is used to classify data.

The following describes two possible implementations in which the first apparatus determines the personalized category data of the first apparatus. This application is also applicable to another implementation. This is not specifically limited in this application.

Implementation 1: Optionally, step 301 specifically includes step a and step b.

Step a: The first apparatus tracks, in a federated learning process, improvement in classification accuracy corresponding to various types of category data of the first apparatus.

The classification accuracy corresponding to the various types of category data of the first apparatus includes classification accuracy of a global model, in each training round, obtained by the first apparatus in the federated learning process on the various types of category data. For example, the first apparatus performs ten training rounds in the federated learning process, to obtain a global model 1 to a global model 10. In an internet of vehicles scenario, the first apparatus includes three types of category data: forward data, left-turn data, and right-turn data. The first apparatus records classification accuracy of the global model 1 respectively on the forward data, the left-turn data, and the right-turn data. For example, the forward data includes ten samples, and the first apparatus identifies categories of the ten samples by using the global model 1. The first apparatus determines a ratio of a quantity of samples whose categories are correctly identified in the ten samples to a total quantity of samples included in the forward data. The ratio may be understood as the classification accuracy of the global model 1 on the forward data. A manner of calculating classification accuracy of the global model 1 on other category data is similar. Details are not described herein. The first apparatus records classification accuracy of the global model 2 respectively on the forward data, the left-turn data, and the right-turn data, ..., and the first apparatus records classification accuracy of the global model 10 respectively on the forward data, the left-turn data, and the right-turn data. The improvement may include an improvement degree of classification accuracy corresponding to each type of category data. For example, as the quantity of training rounds increases, the first apparatus determines that classification accuracy corresponding to the forward data is improved most.

Step b: The first apparatus determines corresponding category data with greatest improvement in classification accuracy as the personalized category data.

For example, as the quantity of training rounds increases, the first apparatus determines that classification accuracy corresponding to the forward data is improved most. The first apparatus determines that the forward data is used as the personalized category data.

Optionally, the foregoing step b is merely an example. In an actual application, the first apparatus determines category data whose corresponding classification accuracy is greater than a preset threshold as the personalized category data. Alternatively, the first apparatus determines category data whose corresponding classification accuracy is greater than or equal to a preset threshold as the personalized category data. For example, the first apparatus includes three types of category data: forward data, left-turn data, and right-turn data. With an increase in the quantity of training rounds, both classification accuracy corresponding to the forward data and classification accuracy corresponding to the left-turn data are greater than the preset threshold, and the first apparatus determines the forward data and the left-turn data as the personalized category data.

Implementation 2: Optionally, step 301 specifically includes step 1 and step 2.

Step 1: The first apparatus determines variation of classification accuracy of a third global model on various types of category data of the first apparatus relative to classification accuracy of a first global model on the various types of category data of the first apparatus.

The third global model is obtained by performing weighted fusion on a global model obtained by performing gradient descent on the first global model by an apparatus other than the first apparatus. In other words, a second apparatus may indicate the another apparatus to continue to perform federated learning, collect a global model reported by the another apparatus, and then fuse the global model reported by the another apparatus to obtain the third global model. Then, the second apparatus sends the third global model to the first apparatus. The first global model is a global model at a moment at which the first apparatus requests or performs unlearning determining. For example, the first global model is a global model obtained by performing federated learning by the first apparatus and the apparatus other than the first apparatus. For example, the global model is a classification model, and the classification model is used to classify data.

For example, the first apparatus includes two types of category data: category data 1 and category data 2. The first apparatus determines classification accuracy of the third global model on the category data 1 and classification accuracy of the third global model on the category data 2. The first apparatus determines classification accuracy of the first global model on the category data 1 and classification accuracy of the first global model on the category data 2. The variation may include a change in the classification accuracy of the third global model on the category data 1 relative to the classification accuracy of the first global model on the category data 1, and a change in the classification accuracy of the third global model on the category data 2 relative to the classification accuracy of the first global model on the category data 2.

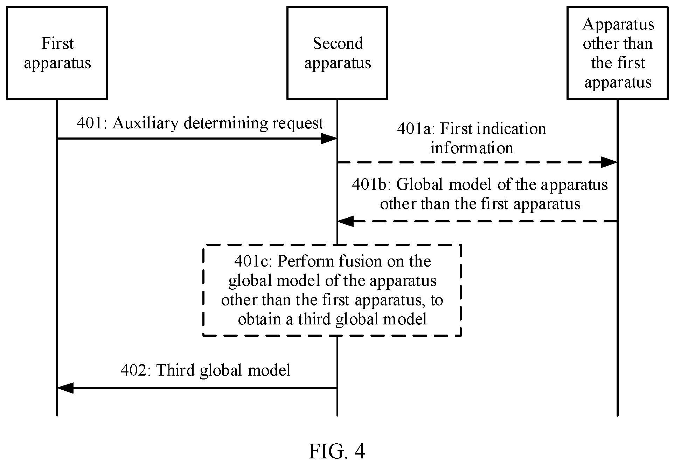

Optionally, the first apparatus obtains the third global model. With reference to the embodiment shown in FIG. 4, the following describes a possible implementation in which the first apparatus obtains the first global model.

401: The first apparatus sends an auxiliary determining request to the second apparatus. Correspondingly, the second apparatus receives the auxiliary determining request from the first apparatus.

The auxiliary determining request is used to request the second apparatus to assist the first apparatus in determining the personalized category data.

402: The second apparatus sends the third global model to the first apparatus. Correspondingly, the first apparatus receives the third global model from the second apparatus.

For the third global model, refer to the related description in step 1. Details are not described herein again.

With reference to step 401a to step 401c, the following describes a possible implementation in which the second apparatus obtains the third global model. Optionally, the embodiment shown in FIG. 4 further includes step 401a to step 401c. Step 401a to step 401c may be performed before step 402.

401a: The second apparatus sends first indication information to the apparatus other than the first apparatus. Correspondingly, the apparatus other than the first apparatus receives the first indication information from the second apparatus.

The first indication information indicates the another apparatus to continue to perform federated learning.

401b: The apparatus other than the first apparatus sends, to the second apparatus, the global model obtained by performing gradient descent on the first global model by the apparatus other than the first apparatus. Correspondingly, the second apparatus receives the global model obtained by performing gradient descent on the first global model by the apparatus other than the first apparatus from the apparatus other than the first apparatus.

For example, the apparatus other than the first apparatus performs M rounds of gradient descent on the first global model. M is an integer greater than or equal to 1.

401c: The second apparatus performs fusion on the global model obtained by performing gradient descent on the first global model by the apparatus other than the first apparatus, to obtain the third global model.

Step 2: The first apparatus uses category data whose classification accuracy has decreased as the personalized category data.

For example, the first apparatus includes two types of category data: category data 1 and category data 2. The variation includes a change in classification accuracy of the third global model on the category data 1 relative to classification accuracy of the first global model on the category data 1, and a change in classification accuracy of the third global model on the category data 2 relative to classification accuracy of the first global model on the category data 2. The first apparatus determines, based on the variation, that classification accuracy of the third global model on the category data 1 is less than classification accuracy of the first global model on the category data 1, and classification accuracy of the third global model on the category data 2 is greater than classification accuracy of the first global model on the category data 2. Therefore, the first apparatus may determine that the category data 1 is the personalized category data.

Optionally, the foregoing step 2 is merely one manner in which the first apparatus selects the personalized category data. In an actual application, the first apparatus may alternatively select the personalized category data in another manner. For example, the first apparatus determines category data whose classification accuracy has decreased most as the personalized category data. Alternatively, the first apparatus determines category data whose classification accuracy has decreased by greater than a preset threshold as the personalized category data.

Optionally, the embodiment shown in FIG. 3 further includes step 301a to step 301d.

301a: The first apparatus sends an unlearning determining request to the second apparatus. Correspondingly, the second apparatus receives the unlearning determining request from the first apparatus.

The unlearning determining request is used to request to determine whether to perform federated unlearning.

301b: The second apparatus sends a training contribution degree to the first apparatus. Correspondingly, the first apparatus receives the training contribution degree from the second apparatus.

The training contribution degree represents the extent of contribution of the first apparatus to model training, that is, represents the extent of contribution of original data of the first apparatus to performance improvement of a global model. For example, the first apparatus and another apparatus perform federated learning to implement training of a classification model. The classification model may be understood as the global model, and the training contribution degree represents the extent of contribution of original data of the first apparatus to classification performance improvement of the classification model.

In a possible implementation, the training contribution degree may be represented by variation between global accuracy of the first global model and global accuracy of a second global model. For example, the training contribution degree includes (global accuracy of the first global model-global accuracy of the second global model)/global accuracy of the second global model, or the training contribution degree includes a difference between the global accuracy of the first global model and the global accuracy of the second global model.

The global accuracy of the first global model is an accuracy degree of identifying, by the first global model, categories of a part or all of category data of the second apparatus. The first global model is a global model at a moment at which the first apparatus requests or performs unlearning determining. The global accuracy of the second global model is an accuracy degree of identifying, by the second global model, categories of a part or all of category data of the second apparatus. The second global model is a global model at a moment when the first apparatus joins a federated learning process.

Optionally, the following shows two possible implementations of the global accuracy of the first global model.

Implementation 1: The second apparatus determines the global accuracy of the first global model based on a verification dataset of the second apparatus. The verification dataset of the second apparatus includes a part or all of category data of the second apparatus. For example, the second apparatus inputs the verification dataset of the second apparatus into the first global model, to obtain a category of the verification dataset output by the first global model. The verification dataset includes a plurality of pieces of data, and the second apparatus determines a ratio of a quantity of pieces of data whose categories are correctly identified by the first global model in the plurality of pieces of data to a quantity of pieces of data included in the verification dataset. The ratio may be understood as the global accuracy of the first global model.

Implementation 2: Each apparatus in the first apparatus and the another apparatus inputs a verification dataset of the apparatus into the first global model, to obtain a category of the verification dataset output by the first global model. The verification dataset includes a plurality of pieces of data, and the apparatus determines a ratio of a quantity of pieces of data whose categories are correctly identified by the first global model in the plurality of pieces of data to a quantity of pieces of data included in the verification dataset. The ratio may be understood as local accuracy of the first global model obtained by the apparatus. Each apparatus in the first apparatus and the another apparatus reports the local accuracy of the first global model to the second apparatus. That is, the local accuracy reported by each apparatus in the first apparatus and the another apparatus is determined based on the verification dataset of the apparatus and the first global model. The second apparatus collects the local accuracy, of the first global model, that is separately reported by the first apparatus and the another apparatus. The second apparatus fuses the local accuracy, of the first global model, that is separately reported by the first apparatus and the another apparatus, to obtain the global accuracy of the first global model.

A process of determining the global accuracy of the second global model is similar to the foregoing process of determining the global accuracy of the first global model. For details, refer to the related description of the global accuracy of the first global model. Details are not described herein again.

In another possible implementation, the training contribution degree includes an average proportion value, and the average proportion value is, between the moment for joining the federated learning process and the moment for applying for or performing unlearning determining, an average value of proportions of a gradient magnitude reported by the first apparatus participating in each round of federated learning to a sum of gradient magnitudes reported by all apparatuses participating in each round of federated learning. For one round of federated learning, the proportion is equal to: gradient magnitude reported by the first apparatus in the round of federated learning*weight of the first apparatus/weighted sum of gradient magnitudes reported by all the apparatuses in the round of federated learning.

301c: The first apparatus determines, based on the training contribution degree, whether to perform federated unlearning; and if yes, performs step 301; or if no, performs step 301d.

Specifically, if the training contribution degree is greater than a second threshold, the first apparatus determines to perform federated unlearning, and step 301 may be performed; or if the training contribution degree is less than or equal to a second threshold, the first apparatus determines not to perform federated unlearning, and step 301d may be performed. Alternatively, if the training contribution degree is greater than or equal to a second threshold, the first apparatus determines to perform federated unlearning, and step 301 may be performed; or if the training contribution degree is less than a second threshold, the first apparatus determines not to perform federated unlearning, and step 301d may be performed.

For example, if the training contribution degree is represented by variation of global accuracy, a value of the second threshold may be 5% or 10%. If the training contribution degree is represented by a proportion of a gradient magnitude, the second threshold may be determined based on a quantity of apparatuses participating in federated learning and/or weights of the apparatuses participating in federated learning. For example, a larger quantity of apparatuses participating in federated learning indicates a smaller second threshold.

It should be noted that step 301b and step 301c may be used as independent embodiments, and do not depend on other steps in the embodiment shown in FIG. 3. The solution provided in the independent aspect includes: The first apparatus receives a training contribution degree from the second apparatus, and the first apparatus determines, based on the training contribution degree, whether to perform federated unlearning. For example, if the training contribution degree is greater than a second threshold, the second apparatus determines to perform federated unlearning. Optionally, the first apparatus performs step 301. If the training contribution degree is less than or equal to a second threshold, the second apparatus determines not to perform federated unlearning. Optionally, the first apparatus performs step 301d. Therefore, step 301b and step 301c provide a solution for determining whether to perform federated unlearning. Optionally, before the first apparatus receives the training contribution degree from the second apparatus, the method further includes: The first apparatus sends an unlearning determining request to the second apparatus, that is, step 301a.

301d: The first apparatus sends a third withdrawal indication to the second apparatus. Correspondingly, the second apparatus receives the third withdrawal indication from the first apparatus.

The third withdrawal indication notifies the second apparatus that the first apparatus withdraws the federated learning process.

302: The first apparatus determines an unlearning-completion level of the first global model on the personalized category data.

The first global model is a global model at a moment at which the first apparatus requests or performs unlearning determining. For example, the first global model is a global model obtained by performing federated learning by the first apparatus and the apparatus other than the first apparatus.

The unlearning-completion level of the first global model on the personalized category data represents an unlearning degree of the first global model on the personalized category data.

Optionally, the unlearning-completion level of the first global model on the personalized category data is determined based on the first accuracy and the second accuracy. The first accuracy represents classification accuracy of the first global model on the personalized category data. For example, the personalized category data includes 20 samples, and the first apparatus inputs the 20 samples into the first global model, to obtain categories that respectively correspond to the 20 samples and that are output by the first global model. The first apparatus determines a ratio of a quantity of samples whose categories are correctly identified to a total quantity of samples included in the personalized category data. The ratio may be the first accuracy. The second accuracy represents classification accuracy of the second global model on the personalized category data. A manner of calculating the second accuracy is similar to the manner of calculating the first accuracy. Details are not described herein again. The second global model is a global model at a moment when the first apparatus joins a federated learning process. The moment at which the first apparatus requests or performs unlearning determining is later than the moment at which the first apparatus joins the federated learning process. For example, the first global model is obtained through T rounds of model training starting from the moment at which the first apparatus joins the federated learning process. For example, the unlearning-completion level of the first global model on the personalized category data is equal to the second accuracy/the first accuracy.

303: The first apparatus determines, based on the unlearning-completion level of the first global model on the personalized category data, whether to perform federated unlearning for the personalized category data.

Optionally, if the unlearning-completion level of the first global model on the personalized category data is less than a first threshold, the first apparatus determines to perform federated unlearning for the personalized category data. That is, if the unlearning-completion level of the first global model on the personalized category data is less than the first threshold, it indicates that complete forgetting for the personalized category data is not performed. If the unlearning-completion level of the first global model on the personalized category data is greater than or equal to the first threshold, the first apparatus determines not to perform federated unlearning for the personalized category data. That is, if the unlearning-completion level of the first global model on the personalized category data is greater than or equal to the first threshold, it indicates that complete unlearning for the personalized category data is performed. Alternatively, if the unlearning-completion level of the first global model on the personalized category data is less than or equal to the first threshold, the first apparatus determines to perform federated unlearning for the personalized category data; or if the unlearning-completion level of the first global model on the personalized category data is greater than the first threshold, the first apparatus determines not to perform federated unlearning for the personalized category data.

Optionally, the first threshold may be determined based on a requirement of the first apparatus and/or sensitivity of the first apparatus to the personalized category data. For example, the first threshold is 1, that is, the first apparatus requires the first global model to completely forget the personalized category data.

Optionally, the embodiment shown in FIG. 3 further includes step 304 or step 305. Step 304 or step 305 may be performed after step 303. That is, the first apparatus determines, based on the unlearning-completion level of the first global model on the personalized category data, whether to perform federated unlearning for the personalized category data, and if yes, performs step 304; or if no, performs step 305.

304: The first apparatus sends an unlearning request to the second apparatus. Correspondingly, the second apparatus receives the unlearning request from the first apparatus.

The unlearning request is used to request initiation of federated unlearning for the personalized category data.

Optionally, after the first apparatus sends the unlearning request to the second apparatus, the second apparatus may indicate the first apparatus to initiate federated unlearning. The first apparatus may perform federated unlearning. Optionally, for a process in which the first apparatus performs federated unlearning, refer to the related description of the embodiment shown in FIG. 5A and FIG. 5B or FIG. 6A to FIG. 6C. Details are not described herein.

Optionally, after the first apparatus sends the unlearning request to the second apparatus, the second apparatus may alternatively reject the unlearning request of the first apparatus, that is, the second apparatus may feed back a rejection response to the first apparatus, where the rejection response is used to reject the unlearning request of the first apparatus.

305: The first apparatus sends a first withdrawal indication to the second apparatus. Correspondingly, the second apparatus receives the first withdrawal indication from the first apparatus.

The first withdrawal indication notifies the second apparatus that the first apparatus withdraws the federated learning process.

Specifically, if the unlearning-completion level of the first global model on the personalized category data is greater than or equal to the first threshold, the first apparatus determines not to perform federated unlearning for the personalized category data. The first apparatus may directly withdraw the federated learning process.

In this embodiment of this application, the first apparatus determines the personalized category data of the first apparatus. Then, the first apparatus determines the unlearning-completion level of the first global model on the personalized category data, where the first global model is the global model at the moment at which the first apparatus requests or performs unlearning determining. The first apparatus determines, based on the unlearning-completion level, whether to perform federated unlearning for the personalized category data. It can be learned that the first apparatus determines the unlearning-completion level of the first global model on the personalized category data, and determines, based on the unlearning-completion level, whether to perform federated unlearning for the personalized category data. In this way, whether federated unlearning needs to be performed can be effectively determined, to avoid or reduce overheads generated by unnecessary federated unlearning and model performance recovery. Thus, federated unlearning is better achieved.

FIG. 5A and FIG. 5B are a diagram of an embodiment of a data processing method according to an embodiment of this application. Refer to FIG. 5A and FIG. 5B. The method includes the following steps.

501: A second apparatus sends a start indication to a first apparatus. Correspondingly, the first apparatus receives the start indication from the second apparatus.

The start indication indicates the first apparatus to initiate federated unlearning for personalized category data.

502: The first apparatus performs gradient ascent on a first global model based on the personalized category data, to obtain a fourth global model.

For example, the first apparatus performs N rounds of gradient ascent on the first global model based on the personalized category data, to obtain the fourth global model. N is an integer greater than or equal to 1.

An unlearning-completion level of the fourth global model on the personalized category data is greater than a first threshold. Alternatively, an unlearning-completion level of the fourth global model on the personalized category data is greater than or equal to a first threshold. For the first threshold, refer to the related description in the embodiment shown in FIG. 3. Therefore, unlearning effect of the personalized category data is ensured, and overheads caused by unnecessary unlearning and model performance recovery caused by excessive unlearning are avoided.

It should be noted that, in a process in which the first apparatus performs gradient ascent on the first global model based on the personalized category data, when the unlearning-completion level of the global model, obtained by performing gradient ascent, on the personalized category data is less than the first threshold, the first apparatus continues to perform the gradient ascent process. When the unlearning-completion level of the global model, obtained by performing gradient ascent, on the personalized category data is greater than or equal to the first threshold, the first apparatus stops the gradient ascent process. A value of N is a quantity of rounds of performing, by the first apparatus, gradient ascent on the first global model when gradient ascent is stopped. Therefore, complete unlearning for the personalized category data is achieved, and excessive unlearning is avoided.

Optionally, the unlearning-completion level of the fourth global model on the personalized category data is determined based on second accuracy and third accuracy. The second accuracy represents classification accuracy of a second global model on the personalized category data. The third accuracy represents classification accuracy of the fourth global model on the personalized category data. A manner of calculating the third accuracy is similar to the foregoing manner of calculating the first accuracy. For details, refer to the related description of the foregoing manner of calculating the first accuracy. The second global model is a global model at a moment when the first apparatus joins a federated learning process. For example, the unlearning-completion level of the fourth global model on the personalized category data is equal to the second accuracy/the third accuracy.

503: The first apparatus sends the fourth global model to the second apparatus. Correspondingly, the second apparatus receives the fourth global model from the first apparatus.

In a possible implementation, the second apparatus may directly allow the first apparatus to withdraw the federated learning process. In this implementation, optionally, the embodiment shown in FIG. 5A and FIG. 5B further includes step 504. Step 504 may be performed after step 503.

504: The second apparatus sends a first withdrawal permission indication to the first apparatus. Correspondingly, the first apparatus receives the first withdrawal permission indication from the second apparatus.

The first withdrawal permission indication indicates that the first apparatus is allowed to withdraw the federated learning process. Therefore, after the first apparatus receives the first withdrawal permission indication, the first apparatus may withdraw the federated learning process. Optionally, after step 503 and before step 504, the first apparatus may request to withdraw the federated learning process to the second apparatus.

Optionally, the embodiment shown in FIG. 5A and FIG. 5B further includes step 505. Step 505 may be performed after step 503.

505: The second apparatus sends the fourth global model to an apparatus other than the first apparatus. Correspondingly, the apparatus other than the first apparatus receives the fourth global model from the second apparatus.

The fourth global model is used by the apparatus other than the first apparatus to continue to perform federated learning. That is, the apparatus other than the first apparatus continues to perform federated learning based on the fourth global model.

It should be noted that there is no fixed execution sequence between step 504 and step 505. Step 504 may be performed before step 505, or step 505 is performed before step 504, or step 504 and step 505 are simultaneously performed based on a case. This is not specifically limited in this application.

In another possible implementation, the second apparatus may perform performance recovery evaluation on the fourth global model, and then determine whether the first apparatus is allowed to withdraw federated learning. In this implementation, optionally, the embodiment shown in FIG. 5A and FIG. 5B further includes step 506 to step 515. Step 506 to step 515 may be performed after step 503.

506: The second apparatus sends a first test request to the apparatus other than the first apparatus. Correspondingly, the apparatus other than the first apparatus receives the first test request from the second apparatus.

The first test request indicates the apparatus other than the first apparatus to perform an accuracy test on the fourth global model.

507: The apparatus other than the first apparatus sends a first local accuracy to the second apparatus. Correspondingly, the second apparatus receives the first local accuracy sent by the apparatus other than the first apparatus.

Specifically, a local verification dataset of the apparatus includes a plurality of samples. Each apparatus in the apparatus other than the first apparatus inputs the local verification dataset of the apparatus into the fourth global model, to obtain categories of all samples in the plurality of pieces of data output by the fourth global model. The apparatus determines a ratio of a quantity of samples whose data categories are correctly identified to a total quantity of samples included in the local verification dataset of the apparatus, where the ratio is the first local accuracy of the apparatus.

508: The second apparatus determines first global accuracy based on the first local accuracy sent by the apparatus other than the first apparatus.

Specifically, the second apparatus performs weighted fusion on the first local accuracy sent by the apparatus other than the first apparatus, to obtain the first global accuracy.

509: The second apparatus determines, based on the first global accuracy, whether the fourth global model needs performance recovery, and if yes, performs step 510; or if no, performs step 512.

For example, if the first global accuracy is greater than or equal to a third threshold, the second apparatus determines that the fourth global model does not need performance recovery, and step 510 may be performed; or if the first global accuracy is less than a third threshold, the second apparatus determines that the fourth global model needs performance recovery, and step 512 may be performed. Alternatively, if the first global accuracy is greater than a third threshold, the second apparatus determines that the fourth global model does not need performance recovery, and step 510 may be performed; or if the first global accuracy is less than or equal to a third threshold, the second apparatus determines that the fourth global model needs performance recovery, and step 512 may be performed. Optionally, the third threshold may be 80% of the global accuracy of the first global model.

510: The second apparatus sends a first withdrawal permission indication to the first apparatus. Correspondingly, the first apparatus receives the first withdrawal permission indication from the second apparatus.

The first withdrawal permission indication indicates that the first apparatus is allowed to withdraw the federated learning process. Therefore, after the first apparatus receives the first withdrawal permission indication, the first apparatus may withdraw the federated learning process. Optionally, before step 510, the first apparatus may request to withdraw the federated learning process to the second apparatus.

Specifically, if the second apparatus determines that the fourth global model does not need performance recovery, the second apparatus may send the first withdrawal permission indication to the first apparatus.

Optionally, the embodiment shown in FIG. 5A and FIG. 5B further includes step 511. Step 511 may be performed after step 509.

511: The second apparatus sends the fourth global model to the apparatus other than the first apparatus. Correspondingly, the apparatus other than the first apparatus receives the fourth global model from the second apparatus.

The fourth global model is used by the apparatus other than the first apparatus to continue to perform federated learning. That is, the apparatus other than the first apparatus continues to perform federated learning based on the fourth global model.

It should be noted that there is no fixed execution sequence between step 510 and step 511. Step 510 may be performed before step 511, or step 511 is performed before step 510, or step 510 and step 511 are simultaneously performed based on a case. This is not specifically limited in this application.

512: The second apparatus sends a first performance recovery indication to the first apparatus. Correspondingly, the first apparatus receives the first performance recovery indication from the second apparatus.

The first performance recovery indication indicates the first apparatus to perform performance recovery on the fourth global model.

Specifically, if the second apparatus determines that the fourth global model needs performance recovery, the second apparatus may send the first performance recovery indication to the first apparatus.

513: The first apparatus performs gradient descent on the fourth global model based on public category data of the first apparatus, to obtain a fifth global model.

For the public category data of the first apparatus, refer to the related description in the embodiment shown in FIG. 3. Details are not described herein again.

For example, the first apparatus may perform M rounds of gradient descent on the fourth global model based on the public category data of the first apparatus, to obtain the fifth global model. Therefore, classification accuracy of the fourth global model on category data other than the personalized category data is recovered. Optionally, M is preconfigured, or is sent by the second apparatus to the first apparatus, or is specified in a communication protocol. This is not specifically limited in this application.

514: The first apparatus sends the fifth global model to the second apparatus. Correspondingly, the second apparatus receives the fifth global model from the first apparatus.

515: If performance recovery does not need to be performed on the fifth global model, the second apparatus sends a second withdrawal permission indication to the first apparatus. Correspondingly, the first apparatus receives the second withdrawal permission indication from the second apparatus.

The second withdrawal permission indication indicates that the first apparatus is allowed to withdraw the federated learning process.

Specifically, the second apparatus may determine, in a manner similar to the foregoing step 506 to step 509, whether the fifth global model needs performance recovery. If the fifth global model does not need performance recovery, the second apparatus may send the second withdrawal permission indication to the first apparatus. It should be noted that, if performance recovery needs to be performed on the fifth global model, the second apparatus may indicate the first apparatus to perform gradient descent on the fifth global model until an obtained global model does not need performance recovery, or until a quantity of gradient descent rounds of the global model reaches a preset upper limit value.

It can be learned from the above that, in the technical solution of the embodiment shown in FIG. 5A and FIG. 5B, unlearning for the personalized category data is achieved according to a gradient ascent algorithm. The apparatus other than the first apparatus may receive the fourth global model, and continue to perform federated learning based on the fourth global model. Historical data in a previous training round does not need to be stored, thereby avoiding excessive storage overheads. The first apparatus performs gradient ascent on the first global model based on the personalized category data, to obtain the fourth global model. The unlearning-completion level of the fourth global model on the personalized category data is greater than the first threshold. Alternatively, the unlearning-completion level of the fourth global model on the personalized category data is greater than or equal to the first threshold. That is, the unlearning-completion level is used as a stop criterion of the gradient ascent operation, which ensures unlearning effect of the personalized category data, and avoids overheads caused by unnecessary unlearning and model performance recovery caused by excessive unlearning.

FIG. 6A to FIG. 6C is a diagram of yet another embodiment of a data processing method according to an embodiment of this application. Refer to FIG. 6A to FIG. 6C. The method includes the following steps.

601: A second apparatus sends a start indication to a first apparatus. Correspondingly, the first apparatus receives the start indication from the second apparatus.

602: The first apparatus performs gradient ascent on a first global model based on the personalized category data, to obtain a fourth global model.

603: The first apparatus sends the fourth global model to the second apparatus. Correspondingly, the second apparatus receives the fourth global model from the first apparatus.

Step 601 to step 603 are similar to step 501 to step 503 in the embodiment shown in FIG. 5A and FIG. 5B. For details, refer to the related descriptions of step 501 to step 503 in the embodiment shown in FIG. 5A and FIG. 5B. Details are not described herein again.

604: The second apparatus receives a global model obtained by performing gradient descent on the first global model and that is sent by an apparatus other than the first apparatus.

Specifically, the apparatus other than the first apparatus may perform gradient descent on the first global model to obtain the global model, and report the global model to the second apparatus. For example, the apparatus other than the first apparatus performs M rounds of gradient descent on the first global model to obtain the global model, and reports the global model to the second apparatus.

605: The second apparatus performs, by using a first group of weighted values, weighted fusion on the fourth global model and the global model obtained by performing gradient descent on the first global model by the apparatus other than the first apparatus, to obtain a sixth global model.

The first group of weighted values includes weighted values that respectively correspond to the fourth global model and the global model obtained by performing gradient descent on the first global model by the apparatus other than the first apparatus.

It can be learned that, the second apparatus fully utilizes, through weighted fusion, public category data learned by the another apparatus, so that overheads caused by model performance recovery can be reduced. For the public category data, refer to the foregoing related description.

606: The second apparatus sends the sixth global model and a first verification indication to the first apparatus. Correspondingly, the first apparatus receives the sixth global model and the first verification indication from the second apparatus.

The first verification indication indicates the first apparatus to perform unlearning performance verification on the sixth global model.

607: The first apparatus performs unlearning performance verification on the sixth global model, to obtain a first verification result.

Optionally, the first verification result includes an unlearning-completion level of the sixth global model on the personalized category data.

Optionally, the unlearning-completion level of the sixth global model on the personalized category data is determined based on second accuracy and fourth accuracy. The second accuracy is classification accuracy of a second global model on the personalized category data. The second global model is a global model at a moment when the first apparatus joins a federated learning process. The fourth accuracy is classification accuracy of the sixth global model on the personalized category data. A manner of calculating the fourth accuracy is similar to the foregoing manner of calculating the first accuracy. For details, refer to related description of the foregoing manner of calculating the first accuracy. For example, the unlearning-completion level of the sixth global model on the personalized category data is equal to the second accuracy/the fourth accuracy.

608: The first apparatus sends the first verification result to the second apparatus. Correspondingly, the first apparatus receives the first verification result from the second apparatus.

Optionally, the first verification result includes an unlearning-completion level of the sixth global model on the personalized category data. If the unlearning-completion level of the sixth global model on the personalized category data is less than a first threshold, it indicates that the first verification result represents that verification fails. That is, if the unlearning-completion level of the sixth global model on the personalized category data is less than the first threshold, it indicates that complete unlearning for the personalized category data is not performed. If the unlearning-completion level of the sixth global model on the personalized category data is greater than or equal to a first threshold, it indicates that the first verification result represents that verification succeeds. That is, if the unlearning-completion level of the sixth global model on the personalized category data is greater than the first threshold, it indicates that complete unlearning or excessive unlearning for the personalized category data is performed. Alternatively, if the unlearning-completion level of the sixth global model on the personalized category data is less than or equal to a first threshold, it indicates that the first verification result represents that verification fails; or if the unlearning-completion level of the sixth global model on the personalized category data is greater than a first threshold, it indicates that the first verification result represents that verification succeeds. For the first threshold, refer to the related description in the embodiment shown in FIG. 3. Details are not described herein again.

The following describes several possible implementations with reference to a verification status represented by the first verification result.

If the first verification result represents that verification succeeds, in a possible implementation, the second apparatus may allow the first apparatus to withdraw the federated learning process. For this implementation, this application provides two possible implementations. This application is also applicable to another implementation. This is not specifically limited in this application.

Implementation 1: Optionally, the embodiment shown in FIG. 6A to FIG. 6C further includes step 609. Step 609 may be performed after step 608.

609: The second apparatus sends a second withdrawal indication to the first apparatus. Correspondingly, the first apparatus receives the second withdrawal indication from the second apparatus.

The second withdrawal indication indicates the first apparatus to withdraw the federated learning process.

Implementation 2: Optionally, the embodiment shown in FIG. 6A to FIG. 6C further includes step 610 and step 611. Step 610 and step 611 may be performed after step 608.

610: The first apparatus sends a withdrawal request to the second apparatus. Correspondingly, the second apparatus receives the withdrawal request from the first apparatus.

The withdrawal request is used by the first apparatus to request to withdraw the federated learning process.

611: The second apparatus sends a third withdrawal permission indication to the first apparatus. Correspondingly, the first apparatus receives the third withdrawal permission indication from the second apparatus.

The third withdrawal permission indication indicates that the first apparatus is allowed to withdraw the federated learning process. Optionally, step 610 may be an optional step, that is, the second apparatus may directly indicate, by using the third permission indication, that the first apparatus is allowed to withdraw the federated learning process.

Optionally, the embodiment shown in FIG. 6A to FIG. 6C further includes step 612.

612: The second apparatus sends the sixth global model to the apparatus other than the first apparatus. Correspondingly, the apparatus other than the first apparatus receives the sixth global model from the second apparatus.

The sixth global model is used by the apparatus other than the first apparatus to continue to perform federated learning.

It should be noted that, for the foregoing implementation 1, there is no fixed execution sequence between step 609 and step 612. Step 612 may be performed before step 609, or step 609 is performed before step 612, or step 612 and step 609 are simultaneously performed based on a case. This is not specifically limited in this application. For the foregoing implementation 2, there is no fixed execution sequence between step 610 and step 611, and step 612. Step 612 may be first performed, and then step 610 and step 611 are performed; or step 610 and step 611 are first performed, and then step 612 is performed; or step 612 is first performed, and then step 610 and step 611 are performed. This is not specifically limited in this application.

If the first verification result represents that verification succeeds, in another possible implementation, the second apparatus determines whether performance recovery needs to be performed on the sixth global model, and then determines whether the first apparatus is allowed to withdraw the federated learning process. The following describes this implementation with reference to step 613 to step 627.

Optionally, the embodiment shown in FIG. 6A to FIG. 6C further includes step 613 to step 627. Step 613 to step 627 may be performed after step 608.

613: The second apparatus sends a second test request to the apparatus other than the first apparatus. Correspondingly, the apparatus other than the first apparatus receives the second test request from the second apparatus.

The second test request indicates the apparatus other than the first apparatus to perform an accuracy test on the sixth global model.

614: The apparatus other than the first apparatus sends a second local accuracy to the second apparatus. Correspondingly, the second apparatus receives the second local accuracy from the apparatus other than the first apparatus.

615: The second apparatus determines a second global accuracy based on the second local accuracy sent by the apparatus other than the first apparatus.

616: The second apparatus determines, based on the second global accuracy, whether the sixth global model needs performance recovery, and if yes, performs step 617; or if no, performs step 619.

617: The second apparatus sends a fifth withdrawal permission indication to the first apparatus. Correspondingly, the first apparatus receives the fifth withdrawal permission indication from the second apparatus.

The fifth withdrawal permission indication indicates that the first apparatus is allowed to withdraw the federated learning process. Optionally, before step 617, the first apparatus may request to withdraw the federated learning process to the second apparatus.

Step 613 to step 617 are similar to step 506 to step 510 in the embodiment shown in FIG. 5A and FIG. 5B. For details, refer to the related descriptions of step 506 to step 510 in the embodiment shown in FIG. 5A and FIG. 5B. Details are not described herein again.

Optionally, the embodiment shown in FIG. 6A to FIG. 6C further includes step 618.

618: The second apparatus sends the sixth global model to the apparatus other than the first apparatus. Correspondingly, the apparatus other than the first apparatus receives the sixth global model from the second apparatus.

The sixth global model is used by the apparatus other than the first apparatus to continue to perform federated learning. That is, the apparatus other than the first apparatus continues to perform federated learning based on the sixth global model.

It should be noted that there is no fixed execution sequence between step 617 and step 618. Step 617 may be performed before step 618, or step 618 is performed before step 617, or step 617 and step 618 are simultaneously performed based on a case. This is not specifically limited in this application.

619: The second apparatus sends a second performance recovery indication to the first apparatus. Correspondingly, the first apparatus receives the second performance recovery indication from the second apparatus.

If performance recovery needs to be performed on the sixth global model, the second apparatus sends the second performance recovery indication to the first apparatus. Second performance recovery indication indicates the first apparatus to perform performance recovery on the sixth global model.

620: The first apparatus performs gradient descent on the sixth global model based on public category data of the first apparatus, to obtain a seventh global model.

Step 620 is similar to step 513 in the embodiment shown in FIG. 5A and FIG. 5B. For details, refer to the related descriptions of step 513 in the embodiment shown in FIG. 5A and FIG. 5B.

621: The first apparatus sends the seventh global model to the second apparatus. Correspondingly, the second apparatus receives the seventh global model from the first apparatus.

622: The second apparatus sends a third test request to the apparatus other than the first apparatus. Correspondingly, the apparatus other than the first apparatus receives the third test request from the second apparatus.

623: The apparatus other than the first apparatus sends a third local accuracy to the second apparatus. Correspondingly, the second apparatus receives the third local accuracy from the apparatus other than the first apparatus.

624: The second apparatus determines third global accuracy based on the third local accuracy sent by the apparatus other than the first apparatus.

Step 621 to step 624 are similar to step 506 to step 508 in the embodiment shown in FIG. 5A and FIG. 5B. For details, refer to the related descriptions of step 506 to step 508 in the embodiment shown in FIG. 5A and FIG. 5B. Details are not described herein again.

625: The second apparatus determines, based on the third global accuracy, whether the seventh global model needs performance recovery, and if yes, performs step 626.

It should be noted that, if the seventh global model does not need performance recovery, step 626 is performed; or if the seventh global model needs performance recovery, the second apparatus may request, in a manner similar to step 619 and step 620, the first apparatus to perform gradient descent on the seventh global model, and then determine whether the global model obtained by performing gradient descent needs performance recovery. Details are not described herein.

626: The second apparatus sends a fourth withdrawal permission indication to the first apparatus. Correspondingly, the first apparatus receives the fourth withdrawal permission indication from the second apparatus.

The fourth withdrawal permission indication indicates that the first apparatus is allowed to withdraw the federated learning process. Optionally, before step 626, the first apparatus may request to withdraw the federated learning process to the second apparatus.

Optionally, the embodiment shown in FIG. 6A to FIG. 6C further includes step 627.

627: The second apparatus sends the seventh global model to the apparatus other than the first apparatus. Correspondingly, the apparatus other than the first apparatus receives the seventh global model from the second apparatus.

Optionally, there is no fixed execution sequence between step 626 and step 627. Step 626 may be performed before step 627, or step 627 is performed before step 626, or step 626 and step 627 are simultaneously performed based on a case. This is not specifically limited in this application.

If the first verification result represents that verification fails, optionally, the second apparatus may perform model fusion by using a new group of weighted values, and then send a fused global model to the first apparatus. The following provides descriptions with reference to step 628 to step 631.

Optionally, the embodiment shown in FIG. 6A to FIG. 6C further includes step 628 to step 631. Step 628 to step 631 may be performed after step 608.

628: The second apparatus performs, by using a second group of weighted values, weighted fusion on the fourth global model and the global model obtained by performing gradient descent on the first global model by the apparatus other than the first apparatus, to obtain an eighth global model.

The second group of weighted values includes weighted values that respectively correspond to the fourth global model and the global model obtained by performing gradient descent on the first global model by the apparatus other than the first apparatus. The second group of weighted values is different from the first group of weighted values.

629: The second apparatus sends the eighth global model and a second verification indication to the first apparatus. Correspondingly, the first apparatus receives the eighth global model and the second verification indication from the second apparatus.

The second verification indication indicates the first apparatus to perform unlearning performance verification on the eighth global model.

630: The first apparatus performs unlearning performance verification on the eighth global model, to obtain a second verification result.

631: The first apparatus sends the second verification result to the second apparatus. Correspondingly, the second apparatus receives the second verification result from the first apparatus.

Step 629 to step 631 are similar to step 606 to step 608. For details, refer to the related descriptions of step 606 to step 608. Details are not described herein again.

It should be noted that, if the second verification result represents that verification succeeds, in a possible implementation, the second apparatus may allow the first apparatus to withdraw the federated learning process. An execution process of this implementation is similar to step 609 to step 612. For details, refer to the related description of step 609 to step 612. Details are not described herein again. If the second verification result represents that verification succeeds, in another possible implementation, the second apparatus determines whether performance recovery needs to be performed on the eighth global model, and then determines whether the first apparatus is allowed to withdraw the federated learning process. An execution process of this implementation is similar to step 613 to step 627. For details, refer to the related description of step 613 to step 627. Details are not described herein again. If the second verification result represents that verification fails, the second apparatus may perform model fusion by using a new group of weighted values, and then send a fused global model to the first apparatus. A specific implementation process is similar to the process of step 628 to step 631. Details are not described herein again.

It can be learned from the above that, in the technical solution of the embodiment shown in FIG. 6A to FIG. 6C, unlearning for the personalized category data is achieved in a weighted fusion manner, so that unlearning performance can be ensured, and overheads generated by model performance recovery are reduced based on the public category data learned by the another apparatus.

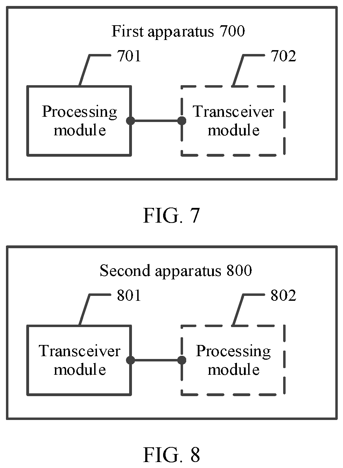

The following is a diagram of a structure of a first apparatus according to an embodiment of this application. Refer to FIG. 7. The first apparatus may be configured to perform a process performed by the first apparatus in embodiments shown in FIG. 3 to FIG. 6A to FIG. 6C. For details, refer to related descriptions in the foregoing method embodiments.

A first apparatus 700 includes a processing module 701. Optionally, the first apparatus 700 further includes a transceiver module 702.

The processing module 701 is configured to process data. The transceiver module 702 may implement a corresponding communication function. The transceiver module 702 may also be referred to as a communication interface or a communication module.

Optionally, the first apparatus 700 may further include a storage module. The storage module may be configured to store instructions and/or data. The processing module 701 may read the instructions and/or the data in the storage module, to enable the first apparatus to implement the foregoing method embodiments.

The first apparatus 700 may be configured to perform an action performed by the first apparatus in the foregoing method embodiments. The first apparatus 700 may be a first apparatus or a component that may be configured in a first apparatus. The processing module 701 is configured to perform a processing-related operation on a first apparatus side in the foregoing method embodiments. The transceiver module 702 is configured to perform a receiving-related operation on the first apparatus side in the foregoing method embodiments.

Optionally, the transceiver module 702 may include a sending module and a receiving module. The sending module is configured to perform the sending operation in the foregoing method embodiments. The receiving module is configured to perform the receiving operation in the foregoing method embodiments.

It should be noted that the first apparatus 700 may include the sending module, but does not include the receiving module. Alternatively, the first apparatus 700 may include the receiving module, but does not include the sending module. Specifically, this may depend on whether the foregoing solution performed by the first apparatus 700 includes a sending action and a receiving action.

Optionally, the first apparatus 700 is configured to perform an action performed by the first apparatus in embodiments shown in FIG. 3 to FIG. 6A to FIG. 6C. For details, refer to related descriptions in embodiments shown in FIG. 3 to FIG. 6A to FIG. 6C. Details are not described herein.

For example, the first apparatus 700 is configured to perform the following solution.

The processing module 701 is configured to: determine personalized category data of the first apparatus 700; determine an unlearning-completion level of a first global model on the personalized category data, where the first global model is a global model at a moment at which the first apparatus 700 requests or performs unlearning determining; and determine, based on the unlearning-completion level, whether to perform federated unlearning for the personalized category data.

In a possible implementation, the processing module 701 is specifically configured to: if the unlearning-completion level is less than a first threshold, determine to perform federated unlearning for the personalized category data; or if the unlearning-completion level is greater than or equal to the first threshold, determine not to perform federated unlearning for the personalized category data.

In another possible implementation, the processing module 701 is specifically configured to: if the unlearning-completion level is less than or equal to a first threshold, determine to perform federated unlearning for the personalized category data; or if the unlearning-completion level is greater than the first threshold, determine not to perform federated unlearning for the personalized category data.

In another possible implementation, the transceiver module 702 is configured to send an unlearning request to a second apparatus, where the unlearning request is used to request initiation of federated unlearning for the personalized category data.

In another possible implementation, the transceiver module 702 is configured to send a first withdrawal indication to the second apparatus, where the first withdrawal indication notifies the second apparatus that the first apparatus 700 withdraws a federated learning process.

In another possible implementation, the unlearning-completion level of the first global model on the personalized category data is determined based on first accuracy and second accuracy, the first accuracy represents classification accuracy of the first global model on the personalized category data, the second accuracy represents classification accuracy of a second global model on the personalized category data, the second global model is a global model at a moment at which the first apparatus 700 joins the federated learning process, and the moment at which the first apparatus 700 requests or performs unlearning determining is later than the moment at which the first apparatus 700 joins the federated learning process.

In another possible implementation, the processing module 701 is specifically configured to: track, in the federated learning process, improvement in classification accuracy corresponding to various types of category data of the first apparatus 700; and use category data with greatest improvement in corresponding classification accuracy as the personalized category data, or use category data whose corresponding classification accuracy is higher than a preset threshold as the personalized category data.

In another possible implementation, the transceiver module 702 is configured to: send an auxiliary determining request to the second apparatus, where the auxiliary determining request is used to request the second apparatus to assist the first apparatus 700 in determining the personalized category data; and receive a third global model from the second apparatus, where the third global model is obtained by performing weighted fusion on a global model obtained by performing gradient descent on the first global model by an apparatus other than the first apparatus 700. The processing module 701 is specifically configured to: determine variation of classification accuracy of the third global model on the various types of category data of the first apparatus 700 relative to classification accuracy of the first global model on the various types of category data of the first apparatus 700; and determine category data whose classification accuracy has decreased as the personalized category data, or determine category data whose classification accuracy has decreased most as the personalized category data, or determine category data whose classification accuracy has decreased by a degree greater than a preset threshold as the personalized category data.

In another possible implementation, the transceiver module 702 is configured to: send an unlearning determining request to the second apparatus, where the unlearning determining request is used to request to determine whether to perform federated unlearning; and receive a training contribution degree from the second apparatus, where the training contribution degree represents the extent of contribution of the first apparatus 700 to model training; and the processing module 701 is further configured to: determine, based on the training contribution degree, whether to perform federated unlearning; and if yes, trigger to perform the step of determining the personalized category data of the first apparatus 700.

In another possible implementation, the transceiver module 702 is configured to: if the first apparatus 700 determines to perform federated unlearning for the personalized category data, receive a start indication from the second apparatus, where the start indication indicates the first apparatus 700 to initiate federated unlearning for the personalized category data; the processing module 701 is further configured to perform gradient ascent on the first global model based on the personalized category data, to obtain a fourth global model, where an unlearning-completion level of the fourth global model on the personalized category data is greater than the first threshold; and the transceiver module 702 is further configured to send the fourth global model to the second apparatus.

In another possible implementation, the unlearning-completion level of the fourth global model on the personalized category data is determined based on the second accuracy and third accuracy, the second accuracy represents the classification accuracy of the second global model on the personalized category data, the third accuracy represents classification accuracy of the fourth global model on the personalized category data, and the second global model is the global model at the moment at which the first apparatus 700 joins the federated learning process.

In another possible implementation, the transceiver module 702 is configured to receive a first withdrawal permission indication from the second apparatus, where the first withdrawal permission indication indicates that the first apparatus 700 is allowed to withdraw the federated learning process.

In another possible implementation, the transceiver module 702 is configured to receive a first performance recovery indication from the second apparatus, where the first performance recovery indication indicates the first apparatus 700 to perform performance recovery on the fourth global model; the processing module 701 is further configured to perform gradient descent on the fourth global model based on public category data of the first apparatus 700, to obtain a fifth global model; and the transceiver module 702 is further configured to send the fifth global model to the second apparatus.

In another possible implementation, the transceiver module 702 is configured to receive a second withdrawal permission indication from the second apparatus, where the second withdrawal permission indication indicates that the first apparatus 700 is allowed to withdraw the federated learning process.

In another possible implementation, the transceiver module 702 is configured to receive a sixth global model and a first verification indication from the second apparatus, where the sixth global model is obtained by performing, by using a first group of weighted values, weighted fusion on the fourth global model and the global model obtained by performing gradient descent on the first global model by the apparatus other than the first apparatus 700, and the first verification indication indicates the first apparatus 700 to perform unlearning performance verification on the sixth global model; the processing module 701 is further configured to perform unlearning performance verification on the sixth global model, to obtain a first verification result; and the transceiver module 702 is further configured to send the first verification result to the second apparatus.

In another possible implementation, the transceiver module 702 is configured to: if the first verification result represents that verification succeeds, send a second withdrawal indication to the second apparatus, where the second withdrawal indication notifies the second apparatus that the first apparatus 700 withdraws the federated learning process.

In another possible implementation, the transceiver module 702 is configured to: if the first verification result represents that verification succeeds, receive a third withdrawal permission indication from the second apparatus, where the third withdrawal permission indication indicates that the first apparatus 700 is allowed to withdraw the federated learning process.

In another possible implementation, the transceiver module 702 is configured to: if the first verification result represents that verification succeeds, receive a second performance recovery indication from the second apparatus, where the second performance recovery indication indicates the first apparatus 700 to perform performance recovery on the sixth global model; the processing module 701 is further configured to perform gradient descent on the sixth global model based on public category data of the first apparatus 700, to obtain a seventh global model; and the transceiver module 702 is further configured to send the seventh global model to the second apparatus.

In another possible implementation, the transceiver module 702 is configured to receive a fourth withdrawal permission indication from the second apparatus, where the fourth withdrawal permission indication indicates that the first apparatus 700 is allowed to withdraw the federated learning process.

In another possible implementation, the transceiver module 702 is configured to: if the first verification result represents that verification fails, receive an eighth global model and a second verification indication from the second apparatus, where the eighth global model is obtained by performing, by using a second group of weighted values, weighted fusion on the fourth global model and the global model obtained by performing gradient descent on the first global model by the apparatus other than the first apparatus 700, and the second verification indication indicates the first apparatus 700 to perform unlearning performance verification on the eighth global model; the processing module 701 is further configured to perform unlearning performance verification on the eighth global model, to obtain a second verification result; and the transceiver module 702 is further configured to send the second verification result to the second apparatus.

It should be understood that a specific process in which the modules perform the foregoing corresponding process has been described in detail in the foregoing method embodiments. For brevity, details are not described herein again.

The processing module 701 in the foregoing embodiment may be implemented by at least one processor or a processor-related circuit. The transceiver module 702 may be implemented by a transceiver or a transceiver-related circuit. The transceiver module 702 may also be referred to as a communication module or a communication interface. The storage module may be implemented by at least one memory.

FIG. 8 is a diagram of a structure of a second apparatus according to an embodiment of this application. Refer to FIG. 8. A second apparatus 800 may be configured to perform a process performed by the second apparatus in embodiments shown in FIG. 3 to FIG. 6A to FIG. 6C. For details, refer to related descriptions in the foregoing method embodiments.

The second apparatus 800 includes a transceiver module 801. Optionally, the second apparatus 800 further includes a processing module 802.

The processing module 802 is configured to process data. The transceiver module 801 may implement a corresponding communication function. The transceiver module 801 may also be referred to as a communication interface or a communication module.

Optionally, the second apparatus 800 may further include a storage module. The storage module may be configured to store instructions and/or data. The processing module 802 may read the instructions and/or the data in the storage module, to enable the second apparatus to implement the foregoing method embodiments.

The second apparatus 800 may be configured to perform an action performed by the second apparatus in the foregoing method embodiments. The second apparatus 800 may be a second apparatus or a component that may be configured in a second apparatus. The processing module 802 is configured to perform a processing-related operation on a second apparatus side in the foregoing method embodiments. The transceiver module 801 is configured to perform a receiving-related operation on the second apparatus side in the foregoing method embodiments.

Optionally, the transceiver module 801 may include a sending module and a receiving module. The sending module is configured to perform the sending operation in the foregoing method embodiments. The receiving module is configured to perform the receiving operation in the foregoing method embodiments.

It should be noted that the second apparatus 800 may include the sending module, but does not include the receiving module. Alternatively, the second apparatus 800 may include the receiving module, but does not include the sending module. Specifically, this may depend on whether the foregoing solution performed by the second apparatus 800 includes a sending action and a receiving action.

Optionally, the second apparatus 800 is configured to perform an action performed by the second apparatus in embodiments shown in FIG. 3 to FIG. 8. For details, refer to related descriptions in embodiments shown in FIG. 3 to FIG. 8. Details are not described herein.

For example, the second apparatus 800 is configured to perform the following solution.

The transceiver module 801 is configured to receive an unlearning request from a first apparatus, where the unlearning request is used to request initiation of federated unlearning for personalized category data of the first apparatus, an unlearning-completion level of a first global model on the personalized category data is less than a first threshold, or an unlearning-completion level of a first global model on the personalized category data is less than or equal to a first threshold, and the first global model is a global model at a moment at which the first apparatus requests or performs unlearning determining.

For another example, the second apparatus 800 is configured to perform the following solution.

The transceiver module 801 is configured to receive a first withdrawal indication from a first apparatus, where the first withdrawal indication notifies the second apparatus 800 that the first apparatus withdraws a federated learning process, an unlearning-completion level of a first global model on personalized category data is greater than or equal to a first threshold, or an unlearning-completion level of a first global model on the personalized category data is greater than a first threshold, and the first global model is a global model at a moment at which the first apparatus requests or performs unlearning determining.

In a possible implementation, the unlearning-completion level of the first global model on the personalized category data is determined based on first accuracy and second accuracy, the first accuracy represents classification accuracy of the first global model on the personalized category data, the second accuracy represents classification accuracy of a second global model on the personalized category data, the second global model is a global model at a moment at which the first apparatus joins the federated learning process, and the moment at which the first apparatus requests or performs unlearning determining is later than the moment at which the first apparatus joins the federated learning process.

In another possible implementation, the transceiver module 801 is further configured to: receive an auxiliary determining request from the first apparatus, where the auxiliary determining request is used to request the second apparatus 800 to assist the first apparatus in determining the personalized category data; and send a third global model to the first apparatus, where the third global model is obtained by performing weighted fusion on a global model obtained by performing gradient descent on the first global model by an apparatus other than the first apparatus, and the third global model is used by the first apparatus to determine the personalized category data.

In another possible implementation, the transceiver module 801 is further configured to: receive an unlearning determining request from the first apparatus, where the unlearning determining request is used to request to determine whether to perform federated unlearning; and send a training contribution degree to the first apparatus, where the training contribution degree represents the extent of contribution of the first apparatus to model training.

In another possible implementation, the transceiver module 801 is further configured to send a start indication to the first apparatus, where the start indication indicates the first apparatus to initiate federated unlearning for the personalized category data; and receive a fourth global model from the first apparatus, where the fourth global model is obtained by the first apparatus by performing gradient ascent on the first global model based on the personalized category data, and an unlearning-completion level of the fourth global model on the personalized category data is greater than the first threshold, or an unlearning-completion level of the fourth global model on the personalized category data is greater than or equal to the first threshold.

In another possible implementation, the unlearning-completion level of the fourth global model on the personalized category data is determined based on the second accuracy and third accuracy, the second accuracy represents the classification accuracy of the second global model on the personalized category data, the third accuracy represents classification accuracy of the fourth global model on the personalized category data, and the second global model is the global model at the moment at which the first apparatus joins the federated learning process.

In another possible implementation, the transceiver module 801 is further configured to: send a first test request to the apparatus other than the first apparatus, where the first test request indicates the apparatus other than the first apparatus to perform an accuracy test on the fourth global model; and receive first local accuracy sent by the apparatus other than the first apparatus; and the processing module 802 is configured to determine first global accuracy based on the first local accuracy sent by the apparatus other than the first apparatus; and determine based on the first global accuracy, whether the fourth global model needs performance recovery.

In another possible implementation, the transceiver module 801 is further configured to send a first withdrawal permission indication to the first apparatus, where the first withdrawal permission indication indicates that the first apparatus is allowed to withdraw the federated learning process.

In another possible implementation, the transceiver module 801 is further configured to send the fourth global model to the apparatus other than the first apparatus, where the fourth global model is used by the apparatus other than the first apparatus to continue to perform the federated learning process.

In another possible implementation, if the fourth global model needs performance recovery, the transceiver module 801 is further configured to: send a first performance recovery indication to the first apparatus, where the first performance recovery indication indicates the first apparatus to perform performance recovery on the fourth global model; and receive a fifth global model from the first apparatus, where the fifth global model is obtained by performing gradient descent on the fourth global model based on public category data of the first apparatus.

In another possible implementation, if the fifth global model does not need performance recovery, the transceiver module 801 is further configured to send a second withdrawal permission indication to the first apparatus, where the second withdrawal permission indication indicates that the first apparatus is allowed to withdraw the federated learning process.

In another possible implementation, if the fifth global model does not need performance recovery, the transceiver module 801 is further configured to send the fifth global model to the apparatus other than the first apparatus, where the fifth global model is used by the apparatus other than the first apparatus to continue to perform the federated learning process.

In another possible implementation, the transceiver module 801 is further configured to send a sixth global model and a first verification indication to the first apparatus, where the sixth global model is obtained by performing, by using a first group of weighted values, weighted fusion on the fourth global model and the global model obtained by performing gradient descent on the first global model by the apparatus other than the first apparatus, and the first verification indication indicates the first apparatus to perform unlearning performance verification on the sixth global model; and receive a first verification result from the first apparatus, where the first verification result is obtained by performing unlearning performance verification on the sixth global model.

In another possible implementation, the transceiver module 801 is further configured to: if the first verification result represents that verification succeeds, receive a second withdrawal indication from the first apparatus, where the second withdrawal indication notifies the second apparatus 800 that the first apparatus withdraws the federated learning process.

In another possible implementation, the transceiver module 801 is further configured to: if the first verification result represents that verification succeeds, send a third withdrawal permission indication to the first apparatus, where the third withdrawal permission indication indicates that the first apparatus is allowed to withdraw the federated learning process.

In another possible implementation, the transceiver module 801 is further configured to: if the first verification result represents that verification succeeds, send a second test request to the apparatus other than the first apparatus, where the second test request indicates the apparatus other than the first apparatus to perform an accuracy test on the sixth global model; and receive second local accuracy sent by the apparatus other than the first apparatus; and the second apparatus 800 further includes a processing module, and the processing module 802 is configured to determine second global accuracy based on the second local accuracy sent by the apparatus other than the first apparatus; and determine, based on the second global accuracy, whether performance recovery needs to be performed on the sixth global model.

In another possible implementation, the transceiver module 801 is further configured to: if performance recovery needs to be performed on the sixth global model, send a second performance recovery indication to the first apparatus, where the second performance recovery indication indicates the first apparatus to perform performance recovery on the sixth global model; and receive a seventh global model from the first apparatus, where the seventh global model is obtained by performing gradient descent on the sixth global model based on public category data of the first apparatus.

In another possible implementation, the transceiver module 801 is further configured to: send a third test request to the apparatus other than the first apparatus, where the third test request indicates the apparatus other than the first apparatus to perform an accuracy test on the seventh global model; and receive third local accuracy sent by the apparatus other than the first apparatus; the processing module 802 is further configured to determine third global accuracy based on the third local accuracy sent by the apparatus other than the first apparatus; and determine, based on the third global accuracy, whether performance recovery needs to be performed on the seventh global model; and the transceiver module 801 is further configured to: if performance recovery does not need to be performed on the seventh global model, send a fourth withdrawal permission indication to the first apparatus, where the fourth withdrawal permission indication indicates that the first apparatus is allowed to withdraw the federated learning process.

In another possible implementation, the transceiver module 801 is further configured to: if the first verification result represents that verification fails, send an eighth global model and a second verification indication to the first apparatus, where the eighth global model is obtained by performing, by using a second group of weighted values, weighted fusion on the fourth global model and the global model obtained by performing gradient descent on the first global model by the apparatus other than the first apparatus, and the second verification indication indicates the first apparatus to perform unlearning performance verification on the eighth global model; and receive a second verification result from the first apparatus, where the second verification result is obtained by performing unlearning performance verification on the eighth global model.

It should be understood that a specific process in which the modules perform the foregoing corresponding process has been described in detail in the foregoing method embodiments. For brevity, details are not described herein again.

The processing module 802 in the foregoing embodiment may be implemented by at least one processor or processor-related circuit. The transceiver module 801 may be implemented by a transceiver or a transceiver-related circuit. The transceiver module 801 may also be referred to as a communication module or a communication interface. The storage module may be implemented by at least one memory.

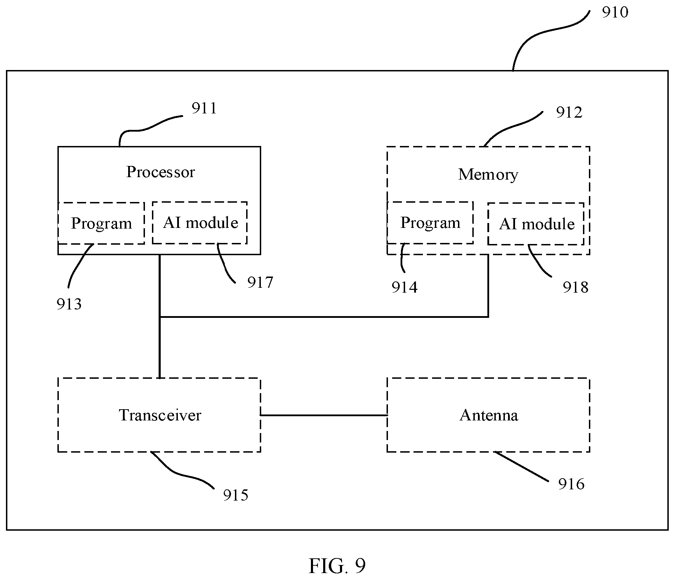

FIG. 9 is a diagram of a structure of an apparatus according to an embodiment of this application. It may be understood that the apparatus 910 includes, for example, modules, units, elements, circuits, or interfaces, which are appropriately configured together to perform the technical solutions in this application. The apparatus 910 may be a network device or a terminal device, or a component (for example, a chip) in these devices, to implement the method described in the foregoing method embodiments. The apparatus 910 includes one or more processors 911. The processor 911 may be a general-purpose processor, a dedicated processor, or the like. For example, the processor may be a baseband processor or a central processing unit. The baseband processor may be configured to process a communication protocol and communication data. The central processing unit may be configured to control the apparatus 910, to execute a software program, and to process data of the software program.

Optionally, in a possible design, the processor 911 may include a program 913 (which may also be referred to as code or instructions), and the program 913 may be run on the processor 911, so that the apparatus 910 performs the method provided in the foregoing method embodiments. In another possible design, the apparatus 910 includes a circuit (not shown in FIG. 9), and the circuit is configured to implement the federated unlearning function in the foregoing method embodiments.

Optionally, the apparatus 910 may include one or more memories 912, and a program 914 (which may also be referred to as code or instructions) is stored in the memory 912. The program 914 may be run on the processor 9111, so that the apparatus 910 performs the method provided in the foregoing method embodiments.

Optionally, the processor 911 may include an AI module 917, and/or the memory 912 may include an AI module 918. The AI module is configured to implement an AI-related function. The AI module may be implemented by using software, hardware, or a combination of software and hardware. For example, the AI module includes an access network intelligent controller (ran intelligent controller, RIC) module. For example, the AI module may be a near-real-time RIC or a non-real-time RIC.

Optionally, the processor 911 and/or the memory 912 may further store data. The processor and the memory may be separately disposed, or may be integrated together.

Optionally, the communication apparatus 910 may further include a transceiver 915 and/or an antenna 916. The processor 911 may also be referred to as a processing unit sometimes, and controls the apparatus 910 (for example, the network device or the terminal device). The transceiver 915 may also be sometimes referred to as a transceiver unit, a transceiver machine, a transceiver circuit, a transceiver, or the like, and is configured to implement receiving and sending functions of the apparatus 910 through the antenna 916.

This application further provides an apparatus 1000. The apparatus 1000 may be a terminal device, or a processor or a chip of a terminal device. The apparatus 1000 may be configured to perform an operation performed by the first apparatus or the second apparatus in the foregoing method embodiments.

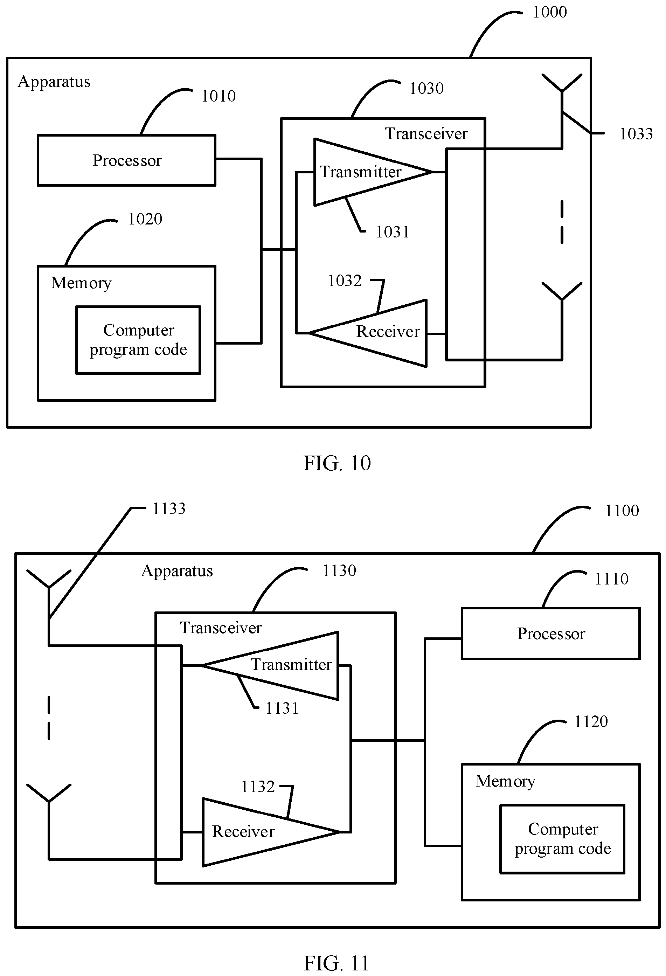

When the apparatus 1000 is a terminal device, FIG. 10 is a simplified diagram of a structure of the terminal device. As shown in FIG. 10, the terminal device includes a processor, a memory, and a transceiver. The memory may store computer program code. The transceiver includes a transmitter 1031, a receiver 1032, a radio frequency circuit (not shown in the figure), an antenna 1033, and an input/output apparatus (not shown in the figure).

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus may include a touchscreen, a display, a keyboard, or the like. The input/output apparatus is mainly configured to: receive data input by a user, and output data to the user. It should be noted that some types of terminal devices may have no input/output apparatus.

When needing to send data, after performing baseband processing on the to-be-sent data, the processor outputs a baseband signal to the radio frequency circuit. Then, the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna. The radio frequency circuit converts the radio frequency signal into a baseband signal, and outputs the baseband signal to the processor. The processor converts the baseband signal into data and processes the data. For ease of description, FIG. 10 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 10, the terminal device includes the processor 1010, the memory 1020, and the transceiver 1030. The processor 1010 may also be referred to as a processing unit, a processing board, a processing module, a processing apparatus, or the like. The transceiver 1030 may also be referred to as a transceiver unit, a transceiver machine, a transceiver apparatus, or the like.

Optionally, a component configured to implement a receiving function in the transceiver 1030 is considered as a receiving module, and a component configured to implement a sending function in the transceiver 1030 is considered as a sending module. That is, the transceiver 1030 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

The processor 1010 is configured to perform processing actions on a first apparatus side or a second apparatus side in embodiments shown in FIG. 3 to FIG. 6A to FIG. 6C. The transceiver 1030 is configured to perform receiving and sending actions on the first apparatus side or the second apparatus side in embodiments shown in FIG. 3 to FIG. 6A to FIG. 6C.

It should be understood that FIG. 10 is merely an example rather than a limitation, and the terminal device including the transceiver module and the processing module may not depend on the structure shown in FIG. 7, FIG. 9, or FIG. 10.

When the communication apparatus 1000 is a chip, the chip includes a processor, a memory, and a transceiver. The transceiver may be an input/output circuit or a communication interface. The processor may be a processing module, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

This application further provides an apparatus 1100. The apparatus 1100 may be a network device or a chip. The apparatus 1100 may be configured to perform an operation performed by the first apparatus or the second apparatus in embodiments shown in FIG. 3 to FIG. 6A to FIG. 6C.

When the apparatus 1100 is a network device, for example, a base station, FIG. 11 is a simplified diagram of a structure of the base station. The base station includes a part 1110, a part 1120, and a part 1130.

The part 1110 is mainly configured to: perform baseband processing, control the base station, and the like. The part 1110 is usually a control center of the base station, may be usually referred to as a processor, and is configured to control the base station to perform a processing operation on a first apparatus side or a second apparatus side in the foregoing method embodiments.

The part 1120 is mainly configured to store computer program code and data.

The part 1130 is mainly configured to: receive and send a radio frequency signal, and perform conversion between a radio frequency signal and a baseband signal. The part 1130 may be usually referred to as a transceiver module, a transceiver machine, a transceiver circuit, a transceiver, or the like. The transceiver module in the part 1130 may also be referred to as the transceiver machine, the transceiver, or the like, and includes an antenna 1133 and a radio frequency circuit (not shown in the figure). The radio frequency circuit is mainly configured to perform radio frequency processing. Optionally, in the part 1130, a component configured to implement a receiving function may be considered as a receiver, and a component configured to implement a sending function may be considered as a transmitter. In other words, the part 1130 includes a receiver 1132 and a transmitter 1131. The receiver machine may also be referred to as a receiving module, a receiver, a receiver circuit, or the like, and the transmitter machine may be referred to as a transmitting module, a transmitter, a transmitter circuit, or the like.

The part 1110 and the part 1120 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 1130 is configured to perform receiving and sending-related processes performed by the first apparatus or the second apparatus in embodiments shown in FIG. 3 to FIG. 6A to FIG. 6C. The processor in part 1110 is configured to perform a processing-related process performed by the first apparatus or the second apparatus in embodiments shown in FIG. 3 to FIG. 6A to FIG. 6C.

It should be understood that FIG. 11 is merely an example rather than a limitation, and the network device including the processor, the memory, and the transceiver may not depend on the structure shown in FIG. 8, FIG. 9, or FIG. 11.

When the apparatus 1100 is a chip, the chip includes a transceiver, a memory, and a processor. The transceiver may be an input/output circuit or a communication interface. The processor is a processor, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

An embodiment of this application further provides a computer-readable storage medium. The computer-readable storage medium stores computer instructions for implementing the method performed by the first apparatus or the second apparatus in the foregoing method embodiments.

For example, when a computer program is executed by a computer, the computer is enabled to implement the method performed by the first apparatus or the second apparatus in the foregoing method embodiments.

An embodiment of this application further provides a computer program product including instructions. When the instructions are executed by a computer, the computer is enabled to implement the method performed by the first apparatus or the second apparatus in the foregoing method embodiments.

An embodiment of this application further provides a communication system. The communication system includes the first apparatus in the foregoing embodiments and the second apparatus in the foregoing embodiments. The first apparatus is configured to perform a part or all of operations performed by the first apparatus in the foregoing method embodiments, and the second apparatus is configured to perform a part or all of operations performed by the second apparatus in the foregoing method embodiments.

An embodiment of this application further provides a chip apparatus. The chip apparatus includes a processor, configured to invoke a computer program or computer instructions stored in a memory, so that the processor performs the method provided in embodiments shown in FIG. 3 to FIG. 6A to FIG. 6C.

In a possible implementation, an input of the chip apparatus corresponds to a receiving operation in any one of embodiments shown in FIG. 3 to FIG. 6A to FIG. 6C, and an output of the chip apparatus corresponds to a sending operation in any one of embodiments shown in FIG. 3 to FIG. 6A to FIG. 6C.

Optionally, the processor is coupled to the memory through an interface.

Optionally, the chip apparatus further includes the memory, and the memory stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control execution of a program of the method provided in any one of embodiments shown in FIG. 3 to FIG. 6A to FIG. 6C. The memory mentioned in any one of the foregoing descriptions may be a read-only memory (read-only memory, ROM), another type of static storage device that can store static information and instructions, a random access memory (random access memory, RAM), or the like.

It may be clearly understood by persons skilled in the art that for convenience and brevity of description, for explanation and beneficial effect of related content in any one of the apparatuses provided above, reference may be made to the foregoing corresponding method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the part essentially contributing to the technical solutions of this application or all or some of the technical solutions may be implemented in a form of a software product. The computer software product is stored in a storage medium and includes a plurality of instructions for instructing a computer device (which may be a personal computer, a server, or a network device) to perform all or some of the steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A data processing method, wherein the method comprises:
determining, by a first apparatus, personalized category data of the first apparatus;
determining, by the first apparatus, an unlearning-completion level of a first global model on the personalized category data, wherein the first global model is a global model at a moment at which the first apparatus requests or performs unlearning determining; and
determining, by the first apparatus based on the unlearning-completion level, whether to perform federated unlearning for the personalized category data.

2. The method according to claim 1, wherein determining, by the first apparatus based on the unlearning-completion level, whether to perform federated unlearning for the personalized category data comprises:
if the unlearning-completion level is less than a first threshold, determining, by the first apparatus, to perform federated unlearning for the personalized category data; or
if the unlearning-completion level is greater than or equal to the first threshold, determining, by the first apparatus, not to perform federated unlearning for the personalized category data.

3. The method according to claim 1 or 2, wherein if the first apparatus determines to perform federated unlearning for the personalized category data, the method further comprises:
sending, by the first apparatus, an unlearning request to a second apparatus, wherein the unlearning request is used to request initiation of federated unlearning for the personalized category data.

4. The method according to claim 1 or 2, wherein if the first apparatus determines not to perform federated unlearning for the personalized category data, the method further comprises:
sending, by the first apparatus, a first withdrawal indication to the second apparatus, wherein the first withdrawal indication notifies the second apparatus that the first apparatus withdraws a federated learning process.

5. The method according to any one of claims 1 to 4, wherein the unlearning-completion level of the first global model on the personalized category data is determined based on first accuracy and second accuracy, the first accuracy represents classification accuracy of the first global model on the personalized category data, the second accuracy represents classification accuracy of a second global model on the personalized category data, the second global model is a global model at a moment at which the first apparatus joins the federated learning process, and the moment at which the first apparatus requests or performs unlearning determining is later than the moment at which the first apparatus joins the federated learning process.

6. The method according to any one of claims 1 to 5, wherein determining, by the first apparatus, the personalized category data of the first apparatus comprises:
tracking, by the first apparatus in the federated learning process, improvement in classification accuracy corresponding to various types of category data of the first apparatus; and
using, by the first apparatus based on the improvement, category data with greatest improvement in classification accuracy as the personalized category data.

7. The method according to any one of claims 1 to 5, wherein the method further comprises:
sending, by the first apparatus, an auxiliary determining request to the second apparatus, wherein the auxiliary determining request is used to request the second apparatus to assist the first apparatus in determining the personalized category data;
receiving, by the first apparatus, a third global model from the second apparatus, wherein the third global model is obtained by performing weighted fusion on a global model obtained by performing gradient descent on the first global model by an apparatus other than the first apparatus; and
determining, by the first apparatus, the personalized category data of the first apparatus comprises:
determining, by the first apparatus, variation of classification accuracy of the third global model on the various types of category data of the first apparatus relative to classification accuracy of the first global model on the various types of category data of the first apparatus; and
using, by the first apparatus based on the variation, category data whose classification accuracy has decreased as the personalized category data.

8. The method according to any one of claims 1 to 7, wherein before determining, by the first apparatus, the personalized category data of the first apparatus, the method further comprises:
sending, by the first apparatus, an unlearning determining request to the second apparatus, wherein the unlearning determining request is used to request to determine whether to perform federated unlearning;
receiving, by the first apparatus, a training contribution degree from the second apparatus, wherein the training contribution degree represents the extent of contribution of the first apparatus to model training;
determining, by the first apparatus based on the training contribution degree, whether to perform federated unlearning; and
if the first apparatus determines, based on the training contribution degree, to perform federated unlearning, triggering the first apparatus to perform the step of determining the personalized category data of the first apparatus.

9. The method according to any one of claims 1 to 8, wherein if the first apparatus determines to perform federated unlearning for the personalized category data, the method further comprises:
receiving, by the first apparatus, a start indication from the second apparatus, wherein the start indication indicates the first apparatus to initiate federated unlearning for the personalized category data;
performing, by the first apparatus, gradient ascent on the first global model based on the personalized category data, to obtain a fourth global model, wherein an unlearning-completion level of the fourth global model on the personalized category data is greater than the first threshold; and
sending, by the first apparatus, the fourth global model to the second apparatus.

10. The method according to claim 9, wherein the unlearning-completion level of the fourth global model on the personalized category data is determined based on the second accuracy and third accuracy, the second accuracy represents the classification accuracy of the second global model on the personalized category data, the third accuracy represents classification accuracy of the fourth global model on the personalized category data, and the second global model is the global model at the moment at which the first apparatus joins the federated learning process.

11. The method according to claim 9 or 10, wherein the method further comprises:
receiving, by the first apparatus, a first withdrawal permission indication from the second apparatus, wherein the first withdrawal permission indication indicates that the first apparatus is allowed to withdraw the federated learning process.

12. The method according to claim 9 or 10, wherein the method further comprises:
receiving, by the first apparatus, a first performance recovery indication from the second apparatus, wherein the first performance recovery indication indicates the first apparatus to perform performance recovery on the fourth global model;
performing, by the first apparatus, gradient descent on the fourth global model based on public category data of the first apparatus, to obtain a fifth global model; and
sending, by the first apparatus, the fifth global model to the second apparatus.

13. The method according to claim 12, wherein the method further comprises:
receiving, by the first apparatus, a second withdrawal permission indication from the second apparatus, wherein the second withdrawal permission indication indicates that the first apparatus is allowed to withdraw the federated learning process.

14. The method according to claim 9 or 10, wherein the method further comprises:
receiving, by the first apparatus, a sixth global model and a first verification indication from the second apparatus, wherein the sixth global model is obtained by performing, by using a first group of weighted values, weighted fusion on the fourth global model and the global model obtained by performing gradient descent on the first global model by the apparatus other than the first apparatus, and the first verification indication indicates the first apparatus to perform unlearning performance verification on the sixth global model;
performing, by the first apparatus, unlearning performance verification on the sixth global model, to obtain a first verification result; and
sending, by the first apparatus, the first verification result to the second apparatus.

15. The method according to claim 14, wherein if the first verification result represents that verification succeeds, the method further comprises:
sending, by the first apparatus, a second withdrawal indication to the second apparatus, wherein the second withdrawal indication notifies the second apparatus that the first apparatus withdraws the federated learning process.

16. The method according to claim 14, wherein if the first verification result represents that verification succeeds, the method further comprises:
receiving, by the first apparatus, a third withdrawal permission indication from the second apparatus, wherein the third withdrawal permission indication indicates that the first apparatus is allowed to withdraw the federated learning process.

17. The method according to claim 14, wherein if the first verification result represents that verification succeeds, the method further comprises:
receiving, by the first apparatus, a second performance recovery indication from the second apparatus, wherein the second performance recovery indication indicates the first apparatus to perform performance recovery on the sixth global model;
performing, by the first apparatus, gradient descent on the sixth global model based on public category data of the first apparatus, to obtain a seventh global model; and
sending, by the first apparatus, the seventh global model to the second apparatus.

18. The method according to claim 17, wherein the method further comprises:
receiving, by the first apparatus, a fourth withdrawal permission indication from the second apparatus, wherein the fourth withdrawal permission indication indicates that the first apparatus is allowed to withdraw the federated learning process.

19. The method according to claim 14, wherein if the first verification result represents that verification fails, the method further comprises:
receiving, by the first apparatus, an eighth global model and a second verification indication from the second apparatus, wherein the eighth global model is obtained by performing, by using a second group of weighted values, weighted fusion on the fourth global model and the global model obtained by performing gradient descent on the first global model by the apparatus other than the first apparatus, and the second verification indication indicates the first apparatus to perform unlearning performance verification on the eighth global model;
performing, by the first apparatus, unlearning performance verification on the eighth global model, to obtain a second verification result; and
sending, by the first apparatus, the second verification result to the second apparatus.

20. A data processing method, wherein the method comprises:
receiving, by a second apparatus, an unlearning request from the first apparatus, wherein the unlearning request is used to request initiation of federated unlearning for personalized category data of the first apparatus, an unlearning-completion level of a first global model on the personalized category data is less than a first threshold, and the first global model is a global model at a moment at which the first apparatus requests or performs unlearning determining.

21. A data processing method, wherein the method comprises:
receiving, by a second apparatus, a first withdrawal indication from a first apparatus, wherein the first withdrawal indication notifies the second apparatus that the first apparatus withdraws a federated learning process, an unlearning-completion level of a first global model on the personalized category data is greater than or equal to a first threshold, and the first global model is a global model at a moment at which the first apparatus requests or performs unlearning determining.

22. The method according to claim 20 or 21, wherein the unlearning-completion level is determined based on first accuracy and second accuracy, the first accuracy represents classification accuracy of the first global model on the personalized category data, the second accuracy represents classification accuracy of a second global model on the personalized category data, the second global model is a global model at a moment at which the first apparatus joins the federated learning process, and the moment at which the first apparatus requests or performs unlearning determining is later than the moment at which the first apparatus joins the federated learning process.

23. The method according to any one of claims 20 to 22, wherein before receiving, by the second apparatus, the unlearning request from the first apparatus, or before receiving, by the second apparatus, the first withdrawal indication from the first apparatus, the method further comprises:
receiving, by the second apparatus, an auxiliary determining request from the first apparatus, wherein the auxiliary determining request is used to request the second apparatus to assist the first apparatus in determining the personalized category data; and
sending, by the second apparatus, a third global model to the first apparatus, wherein the third global model is obtained by performing weighted fusion on a global model obtained by performing gradient descent on the first global model by an apparatus other than the first apparatus, and the third global model is used by the first apparatus to determine the personalized category data.

24. The method according to any one of claims 20 to 23, wherein before receiving, by the second apparatus, the unlearning request from the first apparatus, or before receiving, by the second apparatus, the first withdrawal indication from the first apparatus, the method further comprises:
receiving, by the second apparatus, an unlearning determining request from the first apparatus, wherein the unlearning determining request is used to request to determine whether to perform federated unlearning; and
sending, by the second apparatus, a training contribution degree to the first apparatus, wherein the training contribution degree represents the extent of contribution of the first apparatus to model training.

25. The method according to any one of claims 20, and 22 to 24, wherein after receiving, by the second apparatus, the unlearning request from the first apparatus, the method further comprises:
sending, by the second apparatus, a start indication to the first apparatus, wherein the start indication indicates the first apparatus to initiate federated unlearning for the personalized category data; and
receiving, by the second apparatus, a fourth global model from the first apparatus, wherein the fourth global model is obtained by the first apparatus by performing gradient ascent on the first global model based on the personalized category data, and an unlearning-completion level of the fourth global model on the personalized category data is greater than the first threshold.

26. The method according to claim 25, wherein the unlearning-completion level of the fourth global model on the personalized category data is determined based on the second accuracy and third accuracy, the second accuracy represents the classification accuracy of the second global model on the personalized category data, the third accuracy represents classification accuracy of the fourth global model on the personalized category data, and the second global model is the global model at the moment at which the first apparatus joins the federated learning process.

27. The method according to claim 25 or 26, wherein after receiving, by the second apparatus, the fourth global model from the first apparatus, the method further comprises:
sending, by the second apparatus, a first test request to the apparatus other than the first apparatus, wherein the first test request indicates the apparatus other than the first apparatus to perform an accuracy test on the fourth global model;
receiving, by the second apparatus, first local accuracy sent by the apparatus other than the first apparatus;
determining, by the second apparatus, first global accuracy based on the first local accuracy sent by the apparatus other than the first apparatus; and
determining, by the second apparatus based on the first global accuracy, whether the fourth global model needs performance recovery.

28. The method according to any one of claims 25 to 27, wherein the method further comprises:
sending, by the second apparatus, a first withdrawal permission indication to the first apparatus, wherein the first withdrawal permission indication indicates that the first apparatus is allowed to withdraw the federated learning process.

29. The method according to any one of claims 25 to 28, wherein the method further comprises:
sending, by the second apparatus, the fourth global model to the apparatus other than the first apparatus, wherein the fourth global model is used by the apparatus other than the first apparatus to continue to perform the federated learning process.

30. The method according to claim 27, wherein if the fourth global model needs performance recovery, the method further comprises:
sending, by the second apparatus, a first performance recovery indication to the first apparatus, wherein the first performance recovery indication indicates the first apparatus to perform performance recovery on the fourth global model; and
receiving, by the second apparatus, a fifth global model from the first apparatus, wherein the fifth global model is obtained by performing gradient descent on the fourth global model based on public category data of the first apparatus.

31. The method according to claim 30, wherein if the fifth global model does not need performance recovery, the method further comprises:
sending, by the second apparatus, a second withdrawal permission indication to the first apparatus, wherein the second withdrawal permission indication indicates that the first apparatus is allowed to withdraw the federated learning process.

32. The method according to claim 30 or 31, wherein if the fifth global model does not need performance recovery, the method further comprises:
sending, by the second apparatus, the fifth global model to the apparatus other than the first apparatus, wherein the fifth global model is used by the apparatus other than the first apparatus to continue to perform the federated learning process.

33. The method according to claim 25 or 26, wherein the method further comprises:
sending, by the second apparatus, a sixth global model and a first verification indication to the first apparatus, wherein the sixth global model is obtained by performing, by using a first group of weighted values, weighted fusion on the fourth global model and the global model obtained by performing gradient descent on the first global model by the apparatus other than the first apparatus, and the first verification indication indicates the first apparatus to perform unlearning performance verification on the sixth global model; and
receiving, by the second apparatus, a first verification result from the first apparatus, wherein the first verification result is obtained by performing unlearning performance verification on the sixth global model.

34. The method according to claim 33, wherein if the first verification result represents that verification succeeds, the method further comprises:
receiving, by the second apparatus, a second withdrawal indication from the first apparatus, wherein the second withdrawal indication notifies the second apparatus that the first apparatus withdraws the federated learning process.

35. The method according to claim 33, wherein if the first verification result represents that verification succeeds, the method further comprises:
receiving, by the first apparatus, a third withdrawal permission indication from the second apparatus, wherein the third withdrawal permission indication indicates that the first apparatus is allowed to withdraw the federated learning process.

36. The method according to claim 33, wherein if the first verification result represents that verification succeeds, the method further comprises:
sending, by the second apparatus, a second test request to the apparatus other than the first apparatus, wherein the second test request indicates the apparatus other than the first apparatus to perform an accuracy test on the sixth global model;
receiving, by the second apparatus, second local accuracy sent by the apparatus other than the first apparatus;
determining, by the second apparatus, second global accuracy based on the second local accuracy sent by the apparatus other than the first apparatus; and
determining, by the second apparatus based on the second global accuracy, whether performance recovery needs to be performed on the sixth global model.

37. The method according to claim 36, wherein if performance recovery needs to be performed on the sixth global model, the method further comprises:
receiving, by the second apparatus, a second performance recovery indication from the first apparatus, wherein the second performance recovery indication indicates the first apparatus to perform performance recovery on the sixth global model; and
receiving, by the second apparatus, a seventh global model from the first apparatus, wherein the seventh global model is obtained by performing gradient descent on the sixth global model based on public category data of the first apparatus.

38. The method according to claim 37, wherein the method further comprises:
sending, by the second apparatus, a third test request to the apparatus other than the first apparatus, wherein the third test request indicates the apparatus other than the first apparatus to perform an accuracy test on the seventh global model;
receiving, by the second apparatus, third local accuracy sent by the apparatus other than the first apparatus;
determining, by the second apparatus, third global accuracy based on the third local accuracy sent by the apparatus other than the first apparatus;
determining, by the second apparatus based on the third global accuracy, whether performance recovery needs to be performed on the seventh global model; and
if performance recovery does not need to be performed on the seventh global model, sending, by the second apparatus, a fourth withdrawal permission indication to the first apparatus, wherein the fourth withdrawal permission indication indicates that the first apparatus is allowed to withdraw the federated learning process.

39. The method according to claim 33, wherein if the first verification result represents that verification fails, the method further comprises:
sending, by the second apparatus, an eighth global model and a second verification indication to the first apparatus, wherein the eighth global model is obtained by performing, by using a second group of weighted values, weighted fusion on the fourth global model and the global model obtained by performing gradient descent on the first global model by the apparatus other than the first apparatus, and the second verification indication indicates the first apparatus to perform unlearning performance verification on the eighth global model; and
receiving, by the second apparatus, a second verification result from the first apparatus, wherein the second verification result is obtained by performing unlearning performance verification on the eighth global model.

40. A first apparatus, wherein the first apparatus comprises a processing module, and the processing module is configured to perform a processing operation of the method according to any one of claims 1 to 19.

41. The first apparatus according to claim 40, wherein the first apparatus further comprises a transceiver module, and the transceiver module is configured to perform receiving and sending operations of the method according to any one of claims 1 to 19.

42. A second apparatus, wherein the second apparatus comprises a transceiver module, and the transceiver module is configured to perform receiving and sending operations of the method according to any one of claims 20 to 39.

43. The second apparatus according to claim 42, wherein the second apparatus further comprises a processing module, and the processing module is configured to perform a processing operation of the method according to any one of claims 20 to 39.

44. A communication apparatus, wherein the communication apparatus comprises a processor, and the processor is configured to execute a computer program or computer instructions in a memory, to perform the method according to any one of claims 1 to 39.

45. A computer-readable storage medium, wherein the computer-readable storage medium stores a computer program, and when the computer program is executed by a communication apparatus, the communication apparatus is enabled to perform the method according to any one of claims 1 to 39.

46. A communication system, wherein the communication system comprises a first apparatus and a second apparatus, the first apparatus is configured to perform the method according to any one of claims 1 to 19, and the second apparatus is configured to perform the method according to any one of claims 20 to 39.
